# EUROPÄISCHE PATENTSCHRIFT

(11) **EP 3 046 804 B1**
(45) Veröffentlichungstag und Bekanntmachung des Hinweises auf die Patenterteilung: **08.11.2017**
(21) Anmeldenummer: 14784407.0
(22) Anmeldetag: 18.09.2014
(51) Int. Cl.: B60Q 1/00, B60Q 1/48, B60R 13/04, B60Q 1/26

(54) **ABDECKUNGSEINRICHTUNG, SYSTEM, KAROSSERIEBAUTEIL, KAROSSERIEBAUTEILSYSTEM UND FAHRZEUG**
COVERING DEVICE, SYSTEM, BODY COMPONENT, BODY COMPONENT SYSTEM, AND VEHICLE
DISPOSITIF DE RECOUVREMENT, SYSTÈME, ÉLÉMENT DE CARROSSERIE, SYSTÈME D'ÉLÉMENT DE CARROSSERIE ET VÉHICULE

(30) Priorität: 19.09.2013 DE 202013008321 U; 28.03.2014 DE 202014002763 U
(43) Veröffentlichungstag der Anmeldung: 27.07.2016
(73) Patentinhaber: Samvardhana Motherson Innovative Autosystems B.V. & Co. KG, 63486 Bruchköbel (DE)
(72) Erfinder: TRIER, Martin, 96247 Michelau-Neuensee (DE)
(74) Vertreter: Isarpatent
(86) Internationale Anmeldenummer: PCT/EP2014/069850
(87) Internationale Veröffentlichungsnummer: WO 2015/058908

(56) Entgegenhaltungen:
- EP-A2- 2 062 784
- WO-A1-2011/154667
- DE-A1-102012 000 479
- US-A- 5 163 731

## Beschreibung

### GEBIET DER ERFINDUNG

Die vorliegende Erfindung betrifft eine Abdeckungseinrichtung an wenigstens einem Karosseriebauteil eines Fahrzeugs. Die vorliegende Erfindung betrifft ferner ein System mit einer Abdeckungseinrichtung und einer Beleuchtungseinrichtung, ein Karosseriebauteil und ein Karosseriebauteilsystem, sowie ein Fahrzeug.

### TECHNISCHER HINTERGRUND

Im Allgemeinen weisen Fahrzeuge eine Dachleiste als Abdeckungseinrichtung auf, welche einen Spalt zwischen dem Fahrzeugdach und einem Seitenwandblech abdeckt. Solche Abdeckleisten sind normalerweise aus einem Kunststoff-Metall-Verbund.

Aus der US 5,163,731 A ist eine gattungsgemäße Abdeckungseinrichtung für eine Fahrzeugheckscheibe bekannt. Die Abdeckungseinrichtung weist dabei ein Formteil mit einer Nut auf zur Aufnahme eines reflektierenden Materials.

Des Weiteren ist aus der DE 10 2012 000479 A1 ein beleuchtbares Bauteil für den Innenraum eines Fahrzeugs bekannt, mit einem Basiselement, das zumindest teilweise lichtdurchlässig ausgebildet ist, und einem Sichtelement, welches mit dem Basiselement eine gemeinsame Verbidungsfläche bildet, über welche es fest mit dem Basiselement verbunden ist und welches eine sichtbare Oberfläche des Bauteils bildet.

Aus der WO 2011/154667 A1 ist eine Längsträgerverkleidung bei einem Fahrzeug offenbart, die eine Türschwelle aufnimmt und diese beleuchtet.

In der EP 2 062 784 A2 ist eine beleuchtete Säule einer Fahrzeugtür offenbart.

### ZUSAMMENFASSUNG DER ERFINDUNG

Vor diesem Hintergrund liegt der Erfindung nun die Aufgabe zugrunde, eine verbesserte Abdeckungseinrichtung für wenigstens ein Karosseriebauteil eines Fahrzeugs bereitzustellen.

Erfindungsgemäß wird diese Aufgabe durch eine Abdeckungseinrichtung mit den Merkmalen des Anspruchs 1 und/oder durch ein System mit den Merkmalen des Anspruchs 6 und/oder durch ein Karosseriebauteil mit den Merkmalen des Anspruchs 8 und/oder durch ein Karosseriebauteil-System mit den Merkmalen der Ansprüche 10, 11 bzw. 12 und/oder ein Fahrzeug mit den Merkmalen des Anspruchs 14 gelöst.

Gemäß der Erfindung wird eine Abdeckungseinrichtung zur zumindest teilweisen Abdeckung einer Vertiefung, eines ebenen Abschnitts, eines gewölbten Abschnitts und/oder eines abgestuften Abschnitts wenigstens eines Karosseriebauteils und/oder eines Fahrzeugelements eines Fahrzeugs bereitgestellt, wobei die Abdeckungseinrichtung eine Beleuchtungseinrichtung aufweist oder mit einer Beleuchtungseinrichtung koppelbar ist und wobei die Abdeckungseinrichtung derart ausgebildet ist, dass zumindest ein Abschnitt der Abdeckungseinrichtung mittels der Beleuchtungseinrichtung durchleuchtbar ist.

Auf diese Weise kann die Kontur oder ein Abschnitt der Kontur des Fahrzeugs beleuchtet werden und als Positionsbeleuchtung dienen, so dass das Fahrzeug für einen Fahrzeugführer beispielsweise nachts auf einem unbeleuchteten Parkplatz leichter aufgefunden werden kann. Hierbei wird die Beleuchtung der Abdeckungseinrichtung beispielsweise mit Öffnen des Fahrzeugs durch einen Fahrzeugschlüssel mit Sender angeschaltet. Leuchteten bisher im Stand der Technik nur die Scheinwerfer auf oder ertönte ein Hubsignal, so kann der Fahrzeugführer jetzt auch zusätzlich durch die beleuchtete Abdeckungseinrichtung sein Fahrzeug leichter finden.

Die der vorliegenden Erfindung zugrunde liegende Erkenntnis/Idee besteht darin, die bisherige Abdeckungseinrichtung für eine Positionsbestimmung des Fahrzeugs bei Dunkelheit auszubilden. Dabei wird gemäß der Erfindung die Abdeckungseinrichtung derart ausgebildet, dass sie durchleuchtet werden kann und so bei Dunkelheit nach außen hin leuchtet.

Durch die beleuchtet ausgebildete Abdeckungseinrichtung kann insbesondere ein besseres Erkennen des Fahrzeugs bei Dunkelheit oder diffusen Lichtverhältnissen erzielt werden, um beispielsweise ein Wiederfinden des Fahrzeugs zu vereinfachen, eine bessere Sichtbarkeit im Falle einer Autopanne und/oder ein ungewolltes Beschädigen des Fahrzeugs durch ein anderes Fahrzeug beim Parken oder Vorbeifahren in einer schmalen Gasse usw. zu verhindern. Insbesondere kann z.B. bei einer Fahrzeugpanne durch die beleuchtete Abdeckungseinrichtung, welche beispielsweise zumindest einen Abschnitt der Fahrzeugkontur nachzeichnet, die Erkennbarkeit des Fahrzeugs und beispielsweise dessen Abmessungen für andere Verkehrsteilnehmer verbessert und dadurch die Sicherheit des Fahrzeuginhabers erhöht werden.

Vorteilhafte Ausgestaltungen und Weiterbildungen der Erfindung ergeben sich aus den Unteransprüchen sowie der Beschreibung unter Bezugnahme auf die Zeichnungen. Erfindungsgemäß weist die Abdeckungseinrichtung ein Leistenelement auf. Das Leistenelement kann dabei als Funktionselement, z.B. Rammschutzleiste, Dachreling usw. oder als Dekorelement, insbesondere Zierleiste ausgebildet sein. Erfindungsgemäß weist die Abdeckungseinrichtung oder dessen Leistenelement auf wenigstens einer Längsseite wenigstens ein Lippenelement auf, welches mit dem Leistenelement lösbar verbunden ist. Das Lippenelement kann hierbei an dem Karosseriebauteil in eingebautem Zustand anliegen oder mit diesem einen definierten Spalt bilden. Das Lippenelement ist als separates Teil an dem Leistenelement befestigt.

In einer Ausführungsform der Erfindung kann das wenigstens eine Lippenelement an dem Leistenelement durch Kleben, Verrasten, und/oder Verklemmen befestigt sein.

In einer weiteren Ausführungsform der Erfindung weist das Leistenelement eine Halterung auf zum Aufnehmen wenigstens eines Befestigungsabschnitts des wenigstens einen Lippenelements. Die Halterung kann dabei beispielsweise als Nut mit einem Hinterschnitt ausgebildet sein, in welchen das Lippenelement mit seinem Befestigungsabschnitt einschiebbar ist. Gemäß einer Ausführungsform der Erfindung sind das Leistenelement und/oder das wenigstens eine Lippenelement zum Durchleuchten mittels der Beleuchtungseinrichtung aus einem zumindest teil-transparenten, transluzenten oder opaken Material hergestellt, wobei das Leistenelement und/oder das wenigstens eine Lippenelement aus einem opaken Material wenigstens eine Öffnung zum Hindurchleuchten mittels der Beleuchtungseinrichtung aufweist. Ein Leistenelement oder Lippenelement aus einem zumindest teil-transparenten oder transluzenten Material hat den Vorteil, dass es die Vertiefung des Karosseriebauteils derart abdecken kann, die Vertiefung nach außen geschlossen ist. Ein opakes Leistenelement oder opakes Lippenelement mit wenigstens einer Öffnung zum Hindurchleuchten hat wiederum den Vorteil, dass das Leistenelement aus Metall hergestellt werden kann.

In einer anderen Ausführungsform der Erfindung weist die Beleuchtungseinrichtung wenigstens eine Lichtquelle und/oder wenigstens eine Nachleuchtpigmentierung oder ein Nachleuchtpigment auf, welches dem Material der Abdeckungseinrichtung beigemischt ist. Ebenso kann eine Nachleuchtfarbe, Nachleuchtfolie oder Nachleuchtlack auf die Vorder- oder Außenseite der Abdeckungseinrichtung aufgebracht sein, beispielsweise auf das Leistenelement und/oder das wenigstens eine Lippenelement. Das Nachleuchtpigment bzw. die Nachleuchtpigmentierung hat den Vorteil, dass in diesem Fall keine zusätzliche Lichtquelle, wie z.B. eine LED oder andere Leuchte, vorgesehen werden muss, um die Abdeckungseinrichtung zu beleuchten.

In einer Ausführungsform der Erfindung ist die Lichtquelle beispielsweise eine Leuchtdiode, eine organische Leuchtdiode, eine Elektrolumineszenz-Folie, eine Glühbirne oder ein Laser. Leuchtdioden haben hierbei den Vorteil, dass sie einen geringen Bauraum benötigen, wenig Energie verbrauchen und außerdem auch eine farbige Beleuchtung ermöglichen.

Gemäß einer Ausführungsform der Erfindung weist die Abdeckungseinrichtung wenigstens einen Lichtleiter auf, welcher in die Abdeckungseinrichtung integriert ist. Wenigstens ein Lichtleiter kann dabei in das Leistenelement und/oder das wenigstens eine Lippenelement integriert sein.

In einer Ausführungsform der Erfindung kann der wenigstens eine Lichtleiter integral oder als separates Bauteil in die Abdeckungseinrichtung integriert sein. Dazu kann der wenigstens eine Lichtleiter in die Abdeckungseinrichtung einextrudiert, eingespritzt und/oder in wenigstens einen Hohlraum der Abdeckungseinrichtung angeordnet werden. Beispielsweise kann der wenigstens eine Lichtleiter in einen rohrförmigen Hohlraum, welcher an wenigstens einem Ende offen ist, eingeführt werden und die Öffnung anschließend bei Bedarf verschlossen werden.

Gemäß einer anderen Ausführungsform der Erfindung ist der wenigstens eine Lichtleiter mit der wenigstens einen Lichtquelle koppelbar ist. Der Lichtleiter ist beispielsweise eine lichtleitende Folie, ein lichtleitendes Gewebe oder ein strangförmiger Lichtleiter, z.B. eine Glasfaser oder bei mehreren Lichtleitern ein Glasfaserkabel. Mittels des Lichtleiters kann beispielsweise Licht einer entfernt von der Abdeckungseinrichtung am Fahrzeug angeordneten Lichtquelle, zu der Abdeckungseinrichtung geführt werden und diese beleuchten.

In einer Ausführungsform der Erfindung ist die Abdeckungseinrichtung ein Dekorelement, z.B. eine Zierleiste, wie eine Türzierleiste usw.. Dazu kann das Leistenelement z.B. aus Metall und das Lippenelement mit wenigstens einem Lichtleiter zur Beleuchtung der Abdeckungseinrichtung ausgebildet sein. Ebenso kann die Abdeckungseinrichtung aber auch zusätzlich als Funktionselement ausgebildet sein, beispielsweise als Rammschutzleiste. In diesem Fall kann das Leistenelement der Abdeckungseinrichtung z.B. mit einer Verstärkungsstruktur ausgebildet sein, welche geeignet ist, dass das Leistenelement zusätzlich als Rammschutz wirkt.

In einer Ausführungsform der Erfindung weist ein Karosseriebauteil eines Fahrzeugs wenigstens einen ebenen oder planen Abschnitt, wenigstens einen gewölbten Abschnitt, wenigstens einen abgestuften Abschnitt und/oder eine Vertiefung auf, wobei der wenigstens eine ebene oder plane Abschnitt, der wenigstens eine gewölbte Abschnitt, der wenigstens eine abgestufte Abschnitt und/oder die Vertiefung mit einer Abdeckungseinrichtung versehen ist bzw. sind, wobei die Abdeckungseinrichtung den wenigstens einen ebenen oder planen Abschnitt, den wenigstens einen gewölbten Abschnitt, den wenigstens einen abgestuften Abschnitt und/oder die Vertiefung, z.B. Fuge oder Fugenspalt, nach außen hin zumindest teilweise abdeckt und wobei zumindest ein Abschnitt der Abdeckungseinrichtung mittels einer Beleuchtungseinrichtung durchleuchtet oder beleuchtet wird. Das Karosseriebauteil kann dabei beispielsweise ein Dachblech, ein Kotflügelblech, ein Türblech, ein Motorhaubenblech, ein Heckklappenblech, ein Stoßstangenblech, ein Heckschürzenblech, ein Frontschürzenblech oder ein Seitenwandblech des Fahrzeugs sein.

Gemäß einer weiteren Ausführungsform der Erfindung ist die Beleuchtungseinrichtung Teil des Karosseriebauteils, des Fahrzeugs und/oder Teil der Abdeckungseinrichtung. Beispielsweise kann ein Lichtleiter der Abdeckungseinrichtung mit einer Lichtquelle des Fahrzeugs gekoppelt werden zum Leiten von Licht der Lichtquelle zu der Abdeckungseinrichtung und zum Durchleuchten der Abdeckungseinrichtung.

In einer anderen Ausführungsform der Erfindung weist ein Karosseriebauteil-System ein erstes und zweites Karosseriebauteil auf, wobei das erste und zweite Karosseriebauteil zusammen eine gemeinsame Vertiefung bilden, z.B. eine Fuge oder einen Fugenspalt, welche zumindest teilweise durch eine Abdeckungseinrichtung abgedeckt wird, und wobei zumindest der eine Abschnitt der Abdeckungseinrichtung mittels einer Beleuchtungseinrichtung durchleuchtet oder beleuchtet wird. Dadurch kann beispielsweise eine Beleuchtung einer Abdeckungseinrichtung zum Abdecken eines Spalts zwischen einem Dachblech und einem Seitenblech eines Fahrzeugs bereitgestellt werden.

In einer weiteren Ausführungsform der Erfindung weist ein Karosseriebauteil-System ein Karosseriebauteil und ein Fahrzeugelement auf, wobei das Karosseriebauteil und das Fahrzeugelement zusammen eine gemeinsame Vertiefung, insbesondere eine Fuge oder Fugenspalt bilden, wobei die Vertiefung zumindest teilweise durch wenigstens eine Abdeckungseinrichtung abgedeckt und zumindest der eine Abschnitt der Abdeckungseinrichtung mittels einer Beleuchtungseinrichtung durchleuchtet wird.

In noch einer weiteren Ausführungsform der Erfindung weist ein Karosseriebauteil-System ein Karosseriebauteil und ein Fahrzeugelement auf, wobei das Karosseriebauteil oder das Fahrzeugelement eine Vertiefung, einen ebenen Abschnitt, einen gewölbten Abschnitt und/oder einen abgestuften Abschnitt aufweist, wobei die Vertiefung, der ebene Abschnitt, der gewölbte Abschnitt und/oder der abgestufte Abschnitt zumindest teilweise durch wenigstens eine Abdeckungseinrichtung abgedeckt wird und zumindest der eine Abschnitt der Abdeckungseinrichtung mittels einer Beleuchtungseinrichtung durchleuchtet oder beleuchtet wird.

Gemäß einer Ausführungsform der Erfindung ist das Fahrzeugelement eine Seitenscheibe, ein Schiebedach, ein Glasdach, eine Frontscheibe, eine Heckscheibe, ein Kühlergrill, eine Fahrzeugleuchte, ein Fahrzeugspiegel oder ein Fahrzeugspiegelgehäuse.

Gemäß einer Ausführungsform der Erfindung ist die Beleuchtungseinrichtung Teil wenigstens eines der Karosseriebauteile, wenigstens eines Fahrzeugelements und/oder Teil der Abdeckungseinrichtung.

In einer weiteren Ausführungsform der Erfindung weist ein Fahrzeug, insbesondere Kraftfahrzeug, ein Karosseriebauteil mit einer Vertiefung auf, welche mittels einer Abdeckungseinrichtung abgedeckt wird und/oder ein Karosseriebauteil-System auf, wobei zwei Karosseriebauteile des Karosseriebauteilsystems eine Vertiefung bilden, welche mittels einer Abdeckungseinrichtung abgedeckt werden, wobei wenigstens ein Abschnitt der jeweiligen Abdeckungseinrichtung mittels einer Beleuchtungseinrichtung durchleuchtetet wird.

Gemäß einer Ausführungsform der Erfindung erstreckt sich die Abdeckungseinrichtung entlang der Vertiefung des Karosseriebauteils oder des Karosseriebauteil-Systems in Längsrichtung des Fahrzeugs oder in Querrichtung des Fahrzeugs. Auf diese Weise kann beispielsweise eine in Querrichtung des Fahrzeugs verlaufende Vertiefung in einem Dachblech mittels der entlang der Vertiefung verlaufenden Abdeckungseinrichtung abgedeckt und mittels einer Beleuchtungseinrichtung durchleuchtet bzw. nach außen beleuchtet werden. Ebenso kann eine Vertiefung zwischen dem Dachblech und dem Seitenblech des Fahrzeugs mittels der entlang der Vertiefung verlaufenden Abdeckungseinrichtung abgedeckt und mittels einer Beleuchtungseinrichtung durchleuchtet bzw. nach außen beleuchtet werden. Die Abdeckungseinrichtung kann sich dabei von der A-Säule bis hin zu einer D-Säule des Fahrzeugs erstrecken.

In einer Ausführungsform der Erfindung erstreckt sich die Abdeckungseinrichtung entlang einer Vertiefung des ersten oder zweiten Karosseriebauteils des Karosseriebauteil-Systems oder entlang einer gemeinsamen Vertiefung des ersten und zweiten Karosseriebauteils des Karosseriebauteil-Systems in Längsrichtung des Fahrzeugs und/oder in Querrichtung des Fahrzeugs. Beispielsweise kann die Abdeckungseinrichtung als Dachleiste in einem Fugenspalt des Dachblechs und eines Seitenwandblechs angeordnet sein.

In einer anderen Ausführungsform der Erfindung erstreckt sich die Abdeckungseinrichtung entlang einer Vertiefung des Karosseriebauteils oder des Fahrzeugelements des Karosseriebauteil-Systems oder erstreckt sich entlang einer gemeinsamen Vertiefung des Karosseriebauteils und des Fahrzeugelements in Längsrichtung des Fahrzeugs und/oder in Querrichtung des Fahrzeugs. Beispielsweise kann die Abdeckungseinrichtung in einer Vertiefung des Dachblechs oder in einer Vertiefung in Form eines Fugenspalts zwischen dem Dachblech und einem Schiebe- oder Glasdach, umlaufend um das Schiebedach oder Glasdach angeordnet sein

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Ausschnitt eines Karosseriebauteils und einer Abdeckungseinrichtung in einer Schnittansicht gemäß einer Ausführungsform der Erfindung;
- Fig. 2: ein Ausschnitt zweier aneinander grenzender Karosseriebauteile und einer Abdeckungseinrichtung in einer Schnittansicht gemäß einer Ausführungsform der Erfindung;
- Fig. 3: ein Fahrzeug mit verschiedenen Varianten zur Positionierung einer Abdeckungseinrichtung in einer Draufsicht gemäß einer Ausführungsform der Erfindung gezeigt;
- Fig. 4: eine Seitenansicht des Fahrzeugs gemäß Fig. 3;
- Fig. 5: ein Ausschnitt zweier aneinander grenzender Karosseriebauteile und einer Abdeckungseinrichtung in einer Schnittansicht gemäß einer weiteren Ausführungsform der Erfindung
- Fig. 6: ein Ausschnitt einer Abdeckungseinrichtung mit einem darin integrierten Lichtleiter in einer Querschnittansicht;
- Fig. 7: ein Ausschnitt einer anderen Abdeckungseinrichtung mit einem darin integrierten Lichtleiter in einer Querschnittansicht;
- Fig. 8: ein Ausschnitt eines gewölbten Abschnitts eines Karosseriebauteils in einer Querschnittansicht;
- Fig. 9: ein Ausschnitt eines abgestuften Abschnitts eines Karosseriebauteils in einer Querschnittansicht;
- Fig. 10: eine Perspektivansicht eines Fahrzeugs mit verschiedenen Varianten zur Positionierung einer Abdeckungseinrichtung gemäß der Erfindung;
- Fig. 11: eine Perspektivansicht eines Fahrzeugs mit weiteren Varianten zur Positionierung einer Abdeckungseinrichtung gemäß der Erfindung;
- Fig. 12: eine Perspektivansicht eines Fahrzeugs mit noch weiteren Varianten zur Positionierung einer Abdeckungseinrichtung gemäß der Erfindung; und
- Fig. 13: eine Perspektivansicht eines Fahrzeugs mit anderen Varianten zur Positionierung einer Abdeckungseinrichtung gemäß der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

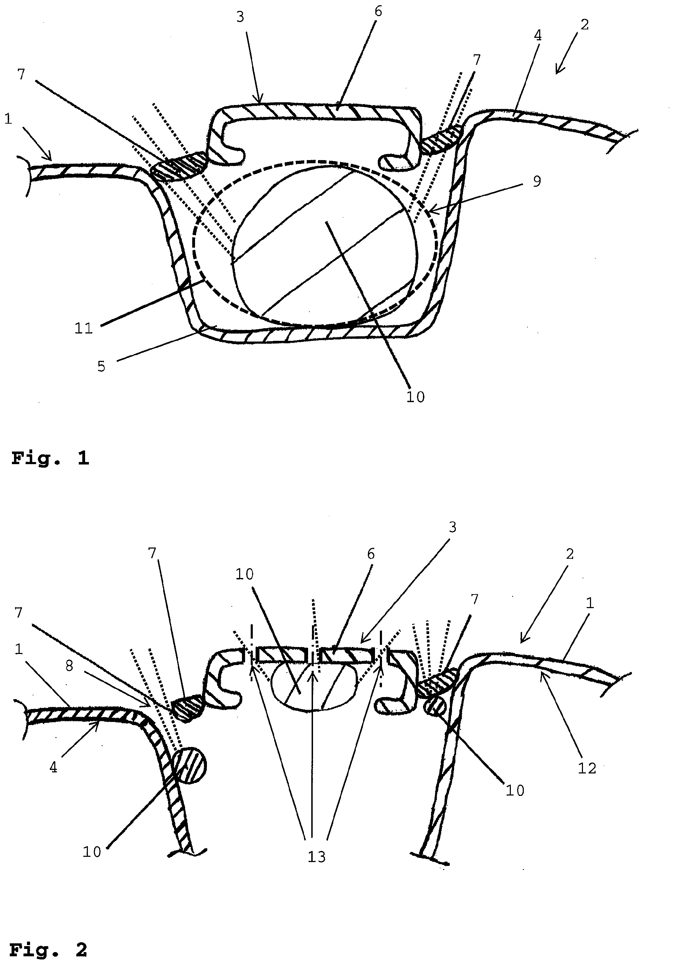

In Fig. 1 ist eine stark vereinfachte und rein schematische Querschnittansicht eines ersten Karosseriebauteils 1 eines Fahrzeugs 2 gezeigt, welches mit einer Abdeckungseinrichtung 3 gemäß einer Ausführungsform der Erfindung versehen ist. Die Befestigung einer solchen Abdeckungseinrichtung an dem Karosseriebauteil oder Karosseriebauteilen ist allgemein bekannt und in Fig. 1 aus Gründen der Übersichtlichkeit nicht dargestellt. Gleiches gilt für nachfolgende Fig. 2.

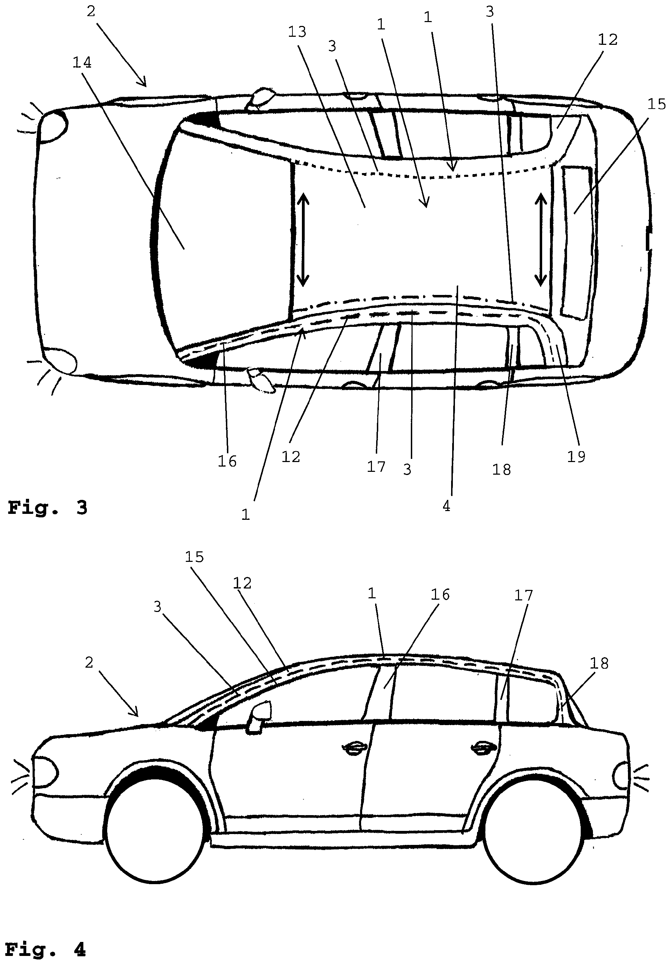

Das Karosseriebauteil 1 ist in dem in Fig. 1 gezeigten Ausführungsbeispiel ein Dachblech 4, wobei es statt eines Dachblechs 4 ebenso ein Seitenwandblech oder jedes andere Karosseriebauteil sein, welches mit wenigstens einer Abdeckungseinrichtung versehbar ist, wie in nachfolgenden Fig. 3 und 4 angedeutet ist. Die mit Bezug auf Fig. 1 und nachfolgende Fig. 2-13 aufgeführten Bleche, wie z.B. das Seitenwandblech, Türblech, Heckklappenblech, Kotflügelblech, Motorhaubenblech, Heckklappenblech, Frontschürzenblech, Heckschürzenblech, Stoßstangenblech usw. können Metallbelche aber ebenso beispielsweise Kunststoffbleche, faserverstärkte Kunststoffbleche usw. oder eine Kombination aus Metall-, Kunststoff- und/oder faserverstärktem Kunststoffblech usw. sein. Die Erfindung ist auf Metall-, Kunststoff- und faserverstärkte Kunststoffbleche, sowie Kombinationen davon nicht beschränkt. Wie in der Schnittansicht in Fig. 1 gezeigt ist, weist das Karosseriebauteil 1 eine Vertiefung 5, z.B. eine Fuge wie in Fig. 1 oder einen Spalt wie in nachfolgender Fig. 2 gezeigt ist, auf. Die Breite der Vertiefung 5 wird hierbei durch die Abdeckungseinrichtung 3 zumindest teilweise oder vollständig abgedeckt. Die Abdeckungseinrichtung 3 weist dabei ein Leistenelement 6 auf. Auf wenigstens einer oder, wie in dem Ausführungsbeispiel in Fig. 1 gezeigt ist, auf beiden Seiten ist das Leistenelement 6 mit jeweils wenigstens einem Lippenelement 7 verbunden. Das Lippenelement 7 ist dabei als separates Teil an dem Leistenelement befestigt. In eingebautem Zustand, liegt das jeweilige Lippenelement 7 an dem Karosseriebauteil 1 an, wie in Fig. 1 gezeigt ist, oder es bildet mit dem Karosseriebauteil 1 einen Spalt oder Fugenspalt, wie in dem Ausführungsbeispiel in nachfolgender Fig. 2 gezeigt ist.

Das Leistenelement 6 und/oder wenigstens ein Lippenelement 7 ist bzw. sind durchleuchtbar ausgebildet. Dazu ist das Leistenelement 6 bzw. das Lippenelement 7 transparent, teiltransparent oder transluzent oder alternativ opak und mit wenigstens einer Öffnung ausgebildet, wie in nachfolgender Fig. 2 gezeigt ist. Das Lippenelement 7 bzw. das Leistenelement 6 ist aus einem transparenten, teil-transparenten oder transluzenten Material, beispielsweise einem transparenten, teil-transparenten oder transluzenten Kunststoff, hergestellt. Das Leistenelement 6 und/oder wenigstens ein Lippenelement 7 können hierbei beispielsweise mittels Extrusion aus dem zumindest teil-transparenten oder transluzenten Kunststoff hergestellt werden.

Sofern wenigstens eine Öffnung in dem Leistenelement 6 bzw. Lippenelement 7 zum Hindurchleuchten vorgesehen ist, kann das Leistenelement 6 bzw. das Lippenelement 7 auch aus einem opaken Material, z.B. Metall oder einem opaken Kunststoff, hergestellt sein, wie in nachfolgendem Ausführungsbeispiel in Fig. 2 gezeigt ist. Indem die Abdeckungseinrichtung durchleuchtbar ist, kann sie zusammen mit einer Beleuchtungseinrichtung als Positionsbeleuchtung dienen, so dass das Fahrzeug für einen Fahrzeugführer beispielsweise nachts auf einem unbeleuchteten Parkplatz leichter aufgefunden werden kann. Des Weiteren weist die Abdeckungseinrichtung 3 eine Beleuchtungseinrichtung 9 auf oder ist mit einer beispielsweise bereits vorhandenen Beleuchtungseinrichtung 9 koppelbar. Die Beleuchtungseinrichtung 9 weist wenigstens eine Lichtquelle 10 und/oder wenigstens ein Nachleuchtpigment bzw. Phosphoreszenzpigment auf. Nachleuchtpigmente oder Phosphoreszenzpigmente leuchten nach Bestrahlung mit sichtbarem Licht nach. Diese Eigenschaft kann man nutzen, um im Dunkeln nachleuchtende Farben zu erzeugen, die vorher durch Bestrahlung mit Licht aufgeladen werden müssen. Beispielsweise können Phosphoreszenzpigmente auf Basis von Erdalkalialuminaten, z. B.

Strontiumaluminat, oder Zinksulfidpigmente eingesetzt werden. Basierend auf solchen Nachleuchtpigmenten oder Phosphoreszenzpigmenten werden Nachleuchtfarben, Nachleuchtlacke, Nachleuchtfolien usw. hergestellt. Das Nachleuchtpigmente oder Phosphoreszenzpigment kann beispielsweise dem Material für das Leistenelement 6 bzw. Lippenelement 7 beigemischt werden.

Ebenso können Nachleuchtfarben, Nachleuchtfolien oder Nachleuchtlacken eingesetzt werden und das Leistenelement 6 und/oder wenigstens ein Lippenelement 7 damit auf seiner Vorder- oder Außenseite beschichtet werden.

Zusätzlich kann die Beleuchtungseinrichtung 9 wenigstens einen Lichtleiter 11 zum Leiten des Lichts der wenigstens einen Lichtquelle 9 aufweisen. Der Lichtleiter 11 und die Lichtquelle 9 sind in Fig. 1 und 2 stark vereinfacht dargestellt.

Der zusätzliche Lichtleiter 11 ist in Fig. 1 mit einer gestrichelten Linie angedeutet. Das wenigstens eine Nachleuchtpigment oder Phosphoreszenzpigment ist dabei wie zuvor beschrieben in das Material für das Lippenelement 7 bzw. Leistenelement 6 eingebracht oder das Lippenelement 7 bzw. Leistenelement 6 mit z.B. einer Nachleuchtfarbe, einer Nachleuchtfolie oder einem Nachleuchtlack beschichtet. Die Erfindung ist jedoch nicht auf Nachleuchtfarben, Nachleuchtfolien, Nachleuchtlacke oder das Beimischen von Nachleuchtpigmenten dem Material der Abdeckungseinrichtung beschränkt, sondern lediglich beispielhaft, um die Abdeckungseinrichtung nachleuchtend auszubilden. Das Nachleuchtpigment oder Phosphoreszenzpigment hat den Vorteil, dass ein dauerhaftes Leuchten der Abdeckungseinrichtung 3 in der Dunkelheit ohne eine zusätzliche Lichtquelle, wie z.B. eine LED, möglich ist.

Die Beleuchtungseinrichtung 9 kann als Lichtquelle 10 beispielsweise eine Leuchtdiode (LED), eine organische Leuchtdiode(OLED), eine Elektrolumineszenz-Folie (EL-Folie), eine Glühbirne, eine Halogenlampe, eine Gasentladungslampe, einen Laser usw. aufweisen. Neben den genannten Beispielen für eine Lichtquelle 10 kann jedoch auch jede andere Lichtquelle vorgesehen werden, welche geeignet ist, in ein Karosseriebauteil 1 integriert zu werden und durch eine Abdeckungseinrichtung 3 hindurch zu leuchten, wobei die Lichtquelle dem Fahrbetrieb standhält. Die Lichtquelle 10 kann dabei beispielsweise ein weißes Licht oder ebenso ein farbiges Licht erzeugen, je nach Funktion und Einsatzzweck. Beispielsweise erlauben farbige LEDs als Lichtquellen 10, dass die Abdeckungseinrichtung 3 auch farbig leuchten kann. Dies gilt für alle Ausführungsformen der Erfindung.

Als zusätzlichen Lichtleiter 11 kann die Beleuchtungseinrichtung 9 beispielsweise eine lichtleitende Folie, ein lichtleitendes Gewebe oder einen strangförmigen Lichtleiter aufweisen. Bei mehreren Lichtleitern 11 können diese beispielsweise als Lichtwellenleiter (LWL), Lichtleiterkabel (LLK) oder Glasfaserkabel ausgebildet sein. Des Weiteren kann der Lichtleiter 11 z.B. starr oder flexible sein. Die Erfindung ist auf die genannten Beispiele für Lichtleiter 11 nicht beschränkt.

Die Lichtquelle 10 und/oder der Lichtleiter 11 können integral mit dem Leistenelement 6 und/oder dem Lippenelement 7 ausgebildet oder als separates Bauteil mit diesem bzw. diesen gekoppelt sein, wie in dem Ausführungsbeispiel in Fig. 1 gezeigt ist.

Wie in Fig. 1 gezeigt ist, ist die Lichtquelle 10 in der Vertiefung 5, hier Fuge, des Karosseriebauteils 1 auf der Rückseite des Leistenelements 6 und der beiden Lippenelemente 7 angeordnet. In dem in Fig. 1 gezeigten Ausführungsbeispiel sind z.B. die beiden Lippenelemente 7 transparent ausgebildet, wohingegen das Leistenelement 6 opak ausgebildet ist. Das Leistenelement 6 ist in dem Ausführungsbeispiel in Fig. 1 beispielsweise eine Metallleiste, an welcher die beiden transparenten Lippenelemente 7 aus Kunststoff befestigt sind. Die Lippenelemente 7 sind an dem Leistenelement 6 befestigt, beispielsweise eingerastet, eingeklemmt, eingekedert, eingeschoben, verschraubt, verstiftet, vernietet und/oder verklebt usw.. Die Erfindung ist auf die genannten Befestigungsverfahren zum Befestigen eines Lippenelements 7 an dem Leistenelement 6 nicht beschränkt. Es kann jedes andere Befestigungsverfahren eingesetzt werden, welches geeignet ist, das Lippenelement 7 an dem Leistenelement 6 zu befestigen.

Beispielsweise kann das Leistenelement 6, z.B. in Form einer Metallleiste, als Aluminium-Strangpressprofil mit eingekederten Lippenelementen 7 ausgebildet sein. Ebenso kann das Leistenelement 7 auch ein Spritzgussteil oder Extrusionsteil sein.

Die Lichtquelle 10 leuchtet in dem in Fig. 1 gezeigten Ausführungsbeispiel durch die transparenten Lippenelemente 7 hindurch. Mittels der Lichtquelle 10 kann somit eine direkte Beleuchtung bereitgestellt werden, hier der Lippenelemente 7. Die Lichtstrahlen der Lichtquelle 10, die durch die Lippenelemente 7 nach außen hindurchtreten sind in Fig. 1 mit einer gepunkteten Linie angedeutet. In dem Fall, dass ein zusätzlicher Lichtleiter 11 vorgesehen ist, wie mit einer gestrichelten Linie in Fig. 1 angedeutet, kann auch eine indirekte Beleuchtung bereitgestellt werden, hier der Lippenelemente 7, durch Leiten des Lichts von der Lichtquelle 10 durch den Lichtleiter 11 zu den Lippenelementen 7. Dadurch können auch beispielsweise Lippenelemente 7 beleuchtet werden, die sich entfernt von der Lichtquelle 10 befinden.

In dem opaken Leistenelement 6 können optional ein oder mehrere zusätzliche Öffnungen, z.B. Schlitze, vorgesehen werden, wie in nachfolgender Fig. 2 gezeigt ist, durch die Licht der Lichtquelle 10 hindurchtreten kann. Auf diese Weise kann neben den transparenten Lippenelementen 7 auch das ansonsten opake Leistenelement 6 in dem Ausführungsbeispiel in Fig. 1 mittels der Beleuchtungseinrichtung 10 durchleuchtet werden. Ebenso kann das opake Leistenelement auf seiner Außenseite mit einer Nachleuchtfarbe, einer Nachleuchtfolie oder einem Nachleuchtlack beschichtet sein.

Die Lichtquelle 10 und/oder der Lichtleiter 11 können, wie zuvor beschrieben auch an dem Leistenelement 6 oder dem Lippenelement 7 befestigt sein, wie in nachfolgender Fig. 2 angedeutet ist, oder mit diesem integral ausgebildet sein. Dadurch kann die Abdeckungseinrichtung 3 mit der Lichtquelle 10 und optional dem zusätzlichen Lichtleiter 11 beispielsweise vormoniert und als System verbaut werden.

In dem Fall, dass die Abdeckungseinrichtung 3 mit einer separaten Lichtquelle 10 und/oder einem separaten Lichtleiter 11 gekoppelt ist, wie in Fig. 1 gezeigt ist, kann beispielsweise eine vorhandene Lichtquelle 10 und/oder Lichtleiter 11 mit der Abdeckungseinrichtung 3 nachgerüstet werden.

In Fig. 2 ist eine stark vereinfachte und rein schematische Schnittansicht zweier Karosseriebauteile 1 eines Fahrzeugs 2 gezeigt, welche mit einer Abdeckungseinrichtung 3 gemäß einer Ausführungsform der Erfindung versehen sind. Ein Karosseriebauteil 1 ist in dem in Fig. 2 gezeigten Ausführungsbeispiel ein Dachblech 4 und das andere Karosseriebauteil 1 ein Seitenwandblech 12. Die Abdeckungseinrichtung 3 kann, wie in nachfolgender Fig. 3 gezeigt, somit zwischen dem Dachblech 4 und dem Seitenwandblech 12 eines Fahrzeugs 2 vorgesehen werden und sich beispielsweise von der Frontscheibe bis hin zur Heckscheibe oder von der A-Säule zu einer B-Säule, einer C-Säule oder bis hin zu einer D-Säule eines Fahrzeugs erstrecken.

Es kann statt der Kombination eines Dachblechs 4 und eines Seitenwandblechs 12 aber auch jede andere Kombination von Karosseriebauteilen 1 vorgesehen sein, welche mit wenigstens einer Abdeckungseinrichtung 3 versehbar sind.

Das in Fig. 2 gezeigte Ausführungsbeispiel entspricht im Wesentlichen dem in Fig. 1 gezeigten Ausführungsbeispiel der Erfindung, so dass hierzu auf die Ausführungen zu Fig. 1 verwiesen wird, um unnötige Wiederholungen zu vermeiden. Das in Fig. 2 dargestellte Ausführungsbeispiel unterscheidet sich von dem in Fig. 1 gezeigten Ausführungsbeispiel im Wesentlichen dadurch, dass die Vertiefung 5, welche mittels der Abdeckungseinrichtung 3 abgedeckt wird, durch zwei Karosseriebauteile 1 in Fig. 2 statt durch ein Karosseriebauteil 1 in Fig. 1 gebildet wird. Die Vertiefung in Fig. 2 ist dabei beispielsweise als Spalt zwischen den beiden Karosseriebauteilen in Fig. 2 ausgebildet.

Des Weiteren bildet die Abdeckungseinrichtung 3 in dem Ausführungsbeispiel in Fig. 2 in eingebautem Zustand einen Spalt 8 oder Fugenspalt zwischen einem der Lippenelemente 7 und dem zugeordneten Karosseriebauteil 1 aus, welcher durch eine Lichtquelle 10 beleuchtet wird. Außerdem sind in dem Ausführungsbeispiel in Fig. 2 eine weitere Lichtquelle 10 an dem Leistenelement 6 und eine weitere Lichtquelle 10 an einem Lippenelement 7 angebracht. Des Weiteren weist das Leistenelement 6 in dem Ausführungsbeispiel in Fig. 2 mehrere zusätzliche Öffnungen 13 zum Hindurchleuchten auf. Die Lichtstrahlen, welche von den Lichtquellen 10 durch die Lippenelemente 7, den Spalt 8 und die Öffnungen 13 nach außen hindurchtreten sind in Fig. 2 mit einer gepunkteten Linie angedeutet.

Wie zuvor mit Bezug auf Fig. 1 beschrieben, ist wenigstens ein Teil der Abdeckungseinrichtung 3, d.h. wenigstens das Leistenelement 6 und/oder wenigstens ein Lippenelement 7, beleuchtbar ausgebildet. Zum Beleuchten sind dabei das Leistenelement 6 und/oder wenigstens ein Lippenelement 7 aus einem zumindest teil-transparenten oder transluzenten Material und optional zusätzlich mit wenigstens einem Nachleuchtpigment oder Phosphoreszenzpigment versehen. Ebenso kann zum Beleuchten das Leistenelement 6 und/oder das wenigstens eine Lippenelement 7 auch aus einem opaken Material hergestellt und mit wenigstens einer Öffnung 13 zum Hindurchleuchten versehen sein, wie in Fig. 2 gezeigt ist.

In dem in Fig. 2 gezeigten Ausführungsbeispiel, liegt ein Lippenelement 7 in eingebautem Zustand an dem einen Karosseriebauteil 1 an, während das andere Lippenelement 7 mit dem anderen Karosseriebauteil 1 einen Spalt 8 oder Fugenspalt bildet. Eine Lichtquelle 10 ist hierbei in der durch die beiden Karosseriebauteile 1 gebildeten Vertiefung 5 angeordnet und ggf. zusätzlich befestigt, z.B. angeklebt usw.. Die Lichtquelle 10 leuchtet durch den Spalt 8 zwischen dem Karosseriebauteil 1 und dem Lippenelement 7 hindurch nach außen. Das Lippenelement 7 ist hierbei opak ausgebildet. Es kann aber grundsätzlich auch aus einem zumindest teil-transparenten oder transluzenten Material hergestellt sein oder ganz entfallen.

Des Weiteren ist an der Rückseite des anderen Lippenelements 7 eine Lichtquelle 10 oder wenigstens ein mit einer Lichtquelle verbundener nicht dargestellter Lichtleiter vorgesehen zum Hindurchleuchten durch das zumindest teil-transparente oder transluzente Lippenelement 7 vorgesehen. Dabei kann optional zusätzlich wenigstens ein Lichtleiter vorgesehen werden, welcher das Licht der Lichtquelle 10 in Längsrichtung des Lippenelements 7 leitet, um beispielsweise von der Lichtquelle 10 entferntere Bereiche des Lippenelements 7 zu beleuchten oder zu durchleuchten. Statt aus einem zumindest teil-transparente oder transluzente Material kann das Lippenelement 7 auch aus einem opaken Material, z.B. einem opaken Kunststoff, hergestellt sein. Um beleuchtet oder durchleuchtet zu werden weist das Lippenelement 7 in diesem Fall wenigstens eine nicht dargestellte Öffnung auf.

Des Weiteren kann, wie in dem Ausführungsbeispiel in Fig. 2 gezeigt ist, an der Rückseite des Leistenelements 6 eine Lichtquelle 10 oder wenigstens ein mit einer Lichtquelle verbundener nicht dargestellter Lichtleiter vorgesehen sein, zum Beleuchten des Leistenelements 6. Das Leistenelement 6 ist in dem Ausführungsbeispiel in Fig. 2 z.B. aus einem opaken Material hergestellt, beispielsweise in Form eines Metall-Stranggussprofils. Zum Beleuchten des Leistenelements 6 weist das Leistenelement 6 wenigstens eine oder wie in Fig. 2 gezeigt mehrere Öffnungen 13 zum Hindurchleuchten auf.

Die Lichtquelle 10 und/oder der wenigstens eine Lichtleiter sind in dem Ausführungsbeispiel in Fig. 2 an dem zugehörigen Leistenelement 6 bzw. dem zugehörigen Lippenelement 7 befestigt, z.B. durch Kleben usw.. Das Kleben stellt jedoch lediglich ein Beispiel einer Vielzahl von Befestigungsverfahren dar, zum Befestigen der Lichtquelle 10 bzw. des Lichtleiters an der Abdeckungseinrichtung 3. Die Erfindung ist auf das genannte Beispiel nicht beschränkt. Es kann jedes andere Befestigungsverfahren eingesetzt werden zum Befestigen der Lichtquelle 10 bzw. des Lichtleiters an der Abdeckungseinrichtung 3. Des Weiteren kann die Lichtquelle 10 bzw. der Lichtleiter, wenn sie z.B. bereits vorhanden sind, auch mit der Abdeckungseinrichtung 3 gekoppelt werden, wie in Fig. 1 und für das eine Lippenelement 7 in Fig. 2 gezeigt ist.

In Fig. 3 ist ein Fahrzeug 2 mit verschiedenen Varianten zur Positionierung einer Abdeckungseinrichtung 3 in einer Draufsicht gemäß einer Ausführungsform der Erfindung gezeigt. Die Darstellung in Fig. 3 ist dabei stark vereinfacht und rein schematisch. Die Varianten zeigen dabei insbesondere Möglichkeiten die Kontur des Fahrzeugs mittels der beleuchteten Abdeckungseinrichtung zu beleuchten und beispielsweise das Auffinden eines geparkten Autos bei Dunkelheit zu erleichtern. Wie zuvor mit Bezug auf das Ausführungsbeispiel in Fig. 1 beschrieben wurde, kann eine jeweilige Abdeckungseinrichtung 3 in einer Vertiefung oder Fuge eines Karosseriebauteils 1 angeordnet sein und eine Beleuchtungseinrichtung aufweisen oder mit einer Beleuchtungseinrichtung gekoppelt sein.

In einer ersten Variante kann die Abdeckungseinrichtung 3 in dem Dachblech 4 als Karosseriebauteil 1 zum Abdecken einer Vertiefung des Dachblechs 4 vorgesehen sein. Der Verlauf der Abdeckungseinrichtung 3 in der Vertiefung des Dachblechs 4 ist dabei in Fig. 3 mit einer strichpunktierten Linie angedeutet und zuvor in dem Ausführungsbeispiel in Fig. 1 gezeigt. Die Abdeckungseinrichtung 3 verläuft dabei entlang der Vertiefung in Längsrichtung des Dachblechs 4 und kann sich zumindest über eine Teillänge oder die gesamte Länge des Dachblechs 4 erstrecken, wie in Fig. 3 angedeutet ist. Ebenso kann sich eine nicht dargestellte Abdeckungseinrichtung auch entlang einer Vertiefung in Querrichtung des Dachblechs 4 beispielsweise über zumindest einen Teil der Breite oder die gesamte Breite der Frontscheibe 14 oder der Heckscheibe 15 erstrecken, wie mit Doppelpfeilen in Fig. 3 angedeutet ist.

In einer zweiten Variante kann die Abdeckungseinrichtung 3 in einem Seitenwandblech 12 als Karosseriebauteil 1 zum Abdecken einer Vertiefung des Seitenwandblechs 12 vorgesehen sein. Der Verlauf der Abdeckungseinrichtung 3 in der Vertiefung des Seitenwandblechs 12 ist dabei in Fig. 3 mit einer gestrichelten Linie angedeutet und vergleichbar dem Ausführungsbeispiel wie es in Fig. 1 gezeigt ist. Die Abdeckungseinrichtung 3 kann sich dabei über zumindest eine Teillänge oder über die gesamte Länge des Seitenwandblechs 12 von der Frontscheibe 14 zu der Heckscheibe 15 oder von der A-Säule 16 über die B-Säule 17, die C-Säule 18 bis hin zur D-Säule 19 des Fahrzeugs 2 und zum Heckdeckel, wie in Fig. 3 gezeigt ist, erstrecken.

Gemäß einer dritten Variante kann die Abdeckungseinrichtung 3 in einer Vertiefung oder Spalt zwischen dem Dachblech 4 als Karosseriebauteil 1 und einem Seitenwandblech 12 als weiterem Karosseriebauteil 1 vorgesehen sein, zum Abdecken der Vertiefung oder des Spalts zwischen den beiden Karosseriebauteilen 1. Der Verlauf der Abdeckungseinrichtung 3 in der Vertiefung oder dem Spalt zwischen dem Dachblech 4 und dem Seitenwandblech 12 ist dabei in Fig. 3 mit einer gepunkteten Linie angedeutet und zuvor in dem Ausführungsbeispiel in Fig. 2 gezeigt.

Die Abdeckungseinrichtung 3 kann sich dabei beispielsweise entlang zumindest einer Teillänge oder über die gesamte Länge des Dachblechs 4, wie in dem Ausführungsbeispiel in Fig. 3 gezeigt ist, oder des Seitenwandblechs 12 erstrecken.

Die Erfindung ist auf die drei gezeigten Varianten für Karosseriebauteile 1 zum Vorsehen der Abdeckungseinrichtung 3 nicht beschränkt. Des Weiteren können statt einer Abdeckungseinrichtung 3 auch wenigstens zwei Abdeckungseinrichtungen hintereinander vorgesehen sein. Ebenso kann eine Abdeckungseinrichtung 3 entlang ihrer Länge auf wenigstens einer Seite statt einem durchgehenden Lippenelement auch wenigstens zwei aufeinanderfolgende Lippenelemente aufweisen. Dies gilt für alle Ausführungsformen der Erfindung

In Fig. 4 ist eine Seitenansicht des Fahrzeugs 2 gemäß Fig. 3 gezeigt. Fig. 4 zeigt dabei den Verlauf der Abdeckungseinrichtung 3 entlang der Vertiefung des Seitenwandblechs 12 mit einer gestrichelten Linie. Der Abdeckungseinrichtung 3 verläuft dabei in Fig. 4 von der A-Säule 16 über die B- Säule 17, die C-Säule 18 bis hin zur D-Säule 19 des Fahrzeugs 2. Die Abdeckungseinrichtung 3 kann sich dabei über die Länge der D-Säule bis zum Heckdeckel erstrecken.

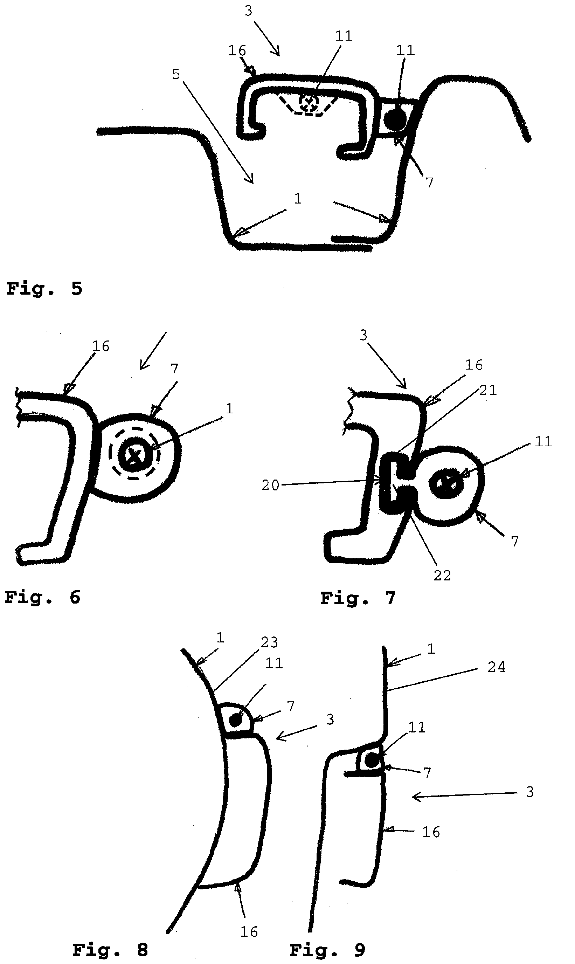

In Fig. 5 ist ein Ausschnitt zweier aneinander grenzender Karosseriebauteile 1 und einer Abdeckungseinrichtung 3 in einer stark vereinfachten und rein schematischen Schnittansicht gemäß einer weiteren Ausführungsform der Erfindung gezeigt. Die Ausführungsform gemäß Fig. 5 weist im Wesentlichen denselben Aufbau auf, wie die zuvor mit Bezug auf die Fig. 1-4 beschriebenen Ausführungsformen, so dass hierzu auf die Beschreibung zu den Fig. 1-4 verwiesen wird, um unnötige Wiederholungen zu vermeiden.

Bei der in Fig. 5 gezeigten Ausführungsform ist wenigstens ein Lichtleiter 11 in die Abdeckungseinrichtung 3 integriert und beispielsweise integral oder einstückig mit der Abdeckungseinrichtung 3 ausgebildet, wie zuvor als Variante mit Bezug auf Fig. 1 beschrieben wurde.

Statt dieses einen Lichtleiters 11 können ebenso mehrere Lichtleiter 11 in die Abdeckungseinrichtung 3 integriert sein. Als Lichtleiter 11 wird in Fig. 5 und den nachfolgenden Fig. 6-13 insbesondere ein strangförmiger Lichtleiter 11 verwendet, z.B. eine Glasfaser oder bei mehreren Lichtleitern 11 ein Glasfaserkabel. Grundsätzlich kann aber als Lichtleiter 11 auch beispielsweise eine lichtleitende Folie und/oder ein lichtleitendes Gewebe vorgesehen werden.

Der wenigstens eine Lichtleiter 11 der Abdeckungseinrichtung 3 in Fig. 5 ist, wie auch in den nachfolgenden Fig. 6-13, mit wenigstens einer Beleuchtungseinrichtung 9, beispielsweise einer in einem Fahrzeug bereits vorhandenen Beleuchtungseinrichtung 9, gekoppelt. Die Abdeckungseinrichtung 3 kann zusätzlich oder alternativ wenigstens eine eigene Beleuchtungseinrichtung 9 aufweisen, die mit dem wenigstens einen Lichtleiter 11 gekoppelt ist.

Die Beleuchtungseinrichtung 9 weist wenigstens eine Lichtquelle 10 und/oder wenigstens ein Nachleuchtpigment, Phosphoreszenzpigment und/oder Fluoereszenzpigment auf, wie zuvor bereits beschrieben wurde. Dies gilt für alle Ausführungsformen der Erfindung. Die Lichtquelle 10 kann, wie zuvor beschrieben, beispielsweise wenigstens eine Leuchtdiode (LED), eine organische Leuchtdiode(OLED), eine Elektrolumineszenz-Folie (EL-Folie), eine Glühbirne, eine Halogenlampe, eine Gasentladungslampe und/oder einen Laser usw. sein.

In dem in Fig. 5 gezeigten Ausführungsbeispiel ist der wenigstens eine Lichtleiter 11 auf einer Seite der Abdeckungseinrichtung 3 beispielsweise in wenigstens ein Lippenelement 7 der Abdeckungseinrichtung 3 integriert.

Ebenso kann wenigstens ein Lichtleiter 11 zusätzlich oder alternativ auch in das Leistenelement 6 integriert sein, wie in Fig. 5 mit einer gestrichelten Linie angedeutet ist. In diesem Falle kann, bei Bedarf, das wenigstens eine Lippenelement 7 auch entfallen oder weggelassen werden. Dies gilt für alle Ausführungsformen der Erfindung.

Das Lippenelement 7 und/oder das Leistenelement 6 in Fig. 5, sowie nachfolgenden Fig. 6-13, können vollständig aus einem zumindest teil-transparenten oder transluzenten Material, z.B. wenigstens einem zumindest teil-transparenten oder transluzenten Kunststoff, bestehen, in welchem der jeweils wenigstens eine Lichtleiter 11 integriert ist. Das zumindest teil-transparenten oder transluzenten Material kann optional zusätzlich zumindest in einem Bereich oder vollständig farbig eingefärbt sein, um in diesem Bereich ein farbiges Leuchten oder Illuminieren der Abdeckungseinrichtung 3 bereitzustellen. Zusätzlich oder alternativ kann das zumindest teil-transparenten oder transluzenten Material optional auch zusätzlich mit einer farbigen und durchleuchtbaren Beschichtung oder einer farbigen und durchleuchtbaren Folie versehen sein. Das teil-transparente oder transluzente Material kann dabei beispielsweise visuell blickdicht aber durchleuchtbar sein, so dass die Abdeckungseinrichtung im Bereich des teil-transparenten oder transluzenten Materials farbig nach außen leuchten kann. Ebenso kann zusätzlich oder alternativ eine farbige Lichtquelle 10 verwendet werden, beispielsweise eine farbige LED, z.B. eine rote, grüne oder blaue LED usw.. Dies gilt für alle Ausführungsformen der Erfindung.

Alternativ können das Lippenelement 7 und/oder das Leistenelement 6 aus einem opaken Material, z.B. wenigstens einem opaken Kunststoff und/oder Metall usw., und wenigstens im Bereich des jeweils wenigstens einen Lichtleiters 11 aus einem zumindest teil-transparenten oder transluzenten Material, z.B. wenigstens einem zumindest teil-transparenten oder transluzenten Kunststoff, hergestellt sein. Dabei kann das zumindest teil-transparenten oder transluzenten Material, wie zuvor beschrieben zusätzlich farbig eingefärbt, mit einer farbigen Folie versehen, mit eine durchleuchtbaren Farbschicht beschichtet und/oder mittels wenigstens einer farbigen Lichtquelle beleuchtet sein, um ein farbiges Leuchten der Abdeckungseinrichtung 3 bereitzustellen. Dies gilt für alle Ausführungsformen der Erfindung.

Der jeweilige Lichtleiter 11 kann beispielsweise in das Lippenelement 7 und/oder das Leistenelement 6 einextrudiert, eingespritzt und/oder in einen Hohlraum des Lippenelements 7 und/oder Leistenelements 6 eingesetzt oder eingezogen werden, wie in nachfolgender Fig. 6 beispielhaft für das Lippenelement 7 mit einer gestrichelten Linie angedeutet ist.

Die Abdeckungseinrichtung 3 mit dem wenigstens einen in die Abdeckungseinrichtung 3 integrierten Lichtleiter 11 ist in dem Ausführungsbeispiel in Fig. 5 zwischen zwei aneinander grenzenden Karosseriebauteilen 1 angeordnet, z.B. einem Dachblech 4 und dem Seitenwandblech 12. Die beiden aneinander grenzenden Karosseriebauteile 1 bilden dabei eine Vertiefung 5, z.B. Spalt oder Fugenspalt, welche durch die Abdeckungseinrichtung 3 in montiertem Zustand zumindest teilweise abgedeckt wird.

Das wenigstens eine Lippenelement 7 auf einer Seite der Abdeckungseinrichtung 3 liegt in dem Ausführungsbeispiel in Fig. 5 an dem gegenüberliegenden Karosseriebauteil 1 an. Ebenso kann das Lippenelement 7 auch mit dem Karosseriebauteil 1 einen Spalt oder Fugenspalt bilden, wie zuvor in dem Ausführungsbeispiel in Fig. 2 gezeigt ist.

Statt in eine Vertiefung 5 zwischen zwei aneinander grenzenden Karosseriebauteilen 1, kann die Abdeckungseinrichtung 3 mit dem wenigstens einen in die Abdeckungseinrichtung 3 integrierten Lichtleiter 11, auch in einer Vertiefung 5 eines Karosseriebauteils 1, wie z.B. einem Dachkanal eines Dachblechs 4, vorgesehen werden, zur zumindest teilweisen Abdeckung der Vertiefung 5 in montiertem Zustand, wie in Fig. 2 zuvor beispielhaft gezeigt ist. Außerdem kann die Abdeckungseinrichtung 3 mit dem wenigstens einen integrierten Lichtleiter 11 auch an einem flachen, gewölbten oder abgestuften Bereich eines Karosseriebauteils vorgesehen werden, wie in nachfolgenden Fig. 8 und 9 beispielhaft gezeigt ist, um diesen Bereich zu beleuchten.

In Fig. 6 ist ein Ausschnitt einer Abdeckungseinrichtung 3, die nicht Teil der Erfingung ist, mit wenigstens einem darin integrierten Lichtleiter 11 in einer stark vereinfachten und rein schematischen Querschnittansicht gezeigt.

Bei dem in Fig. 6 gezeigten Beispiel ist die Abdeckungseinrichtung 3 z.B. einstückig oder integral mit dem wenigstens einen Lichtleiter 11 ausgebildet.

Dabei sind das Leistenelement 6 und das wenigstens eine Lippenelement 7 beispielsweise als ein Extrusionsteil aus wenigstens einem Kunststoff ausgebildet. Der wenigstens eine Lichtleiter 11 ist dabei in Fig. 1 in dem Lippenelement 7 einextrudiert. Ebenso kann der wenigstens eine Lichtleiter 11 oder wenigstens ein weiterer zusätzlicher Lichtleiter 11 auch in dem Leistenelement 6 einextrudiert sein (nicht dargestellt).

Wie mit einer gestrichelten Linie in Fig. 6 angedeutet ist, kann das Lippenelement 7 auch z.B. einen rohrförmigen Hohlraum in seiner Längsrichtung aufweisen, in welchen der wenigstens eine Lichtleiter 11 eingeführt ist. Der Hohlraum ist dabei z.B. an wenigstens einem oder beiden Enden des Lippenelements 7 offen ausgebildet und bei Bedarf mit einem nicht dargestellten Verschlusselement, z.B. einem Gummipfropfen usw., verschließbar.

Statt mit dem Lippenelement 7 kann der wenigstens eine Lichtleiter 11 auch mit dem Leistenelement 6 der Abdeckungseinrichtung 3 integral oder einstückig ausgebildet und in dieses beispielsweise einextrudiert sein.

In einem Weiteren nicht dargestellten Ausführungsbeispiel ist jeweils wenigstens ein Lichtleiter in wenigstens einem Lippenelement 7 und wenigstens ein Lichtleiter in dem Leistenelement 6 integriert. Der jeweilige Lichtleiter ist beispielsweise in das Lippenelement 7 und/oder das Leistenelement 6 einextrudiert.

In Fig. 7 ist ein Ausschnitt einer anderen Abdeckungseinrichtung 3 mit einem darin integrierten Lichtleiter 11 in einer stark vereinfachten und rein schematischen Querschnittansicht gezeigt. Der wenigstens eine Lichtleiter 11 ist hierbei beispielsweise in das Lippenelement 7 der Abdeckeinrichtung 3 integriert, z.B. einextrudiert, in einen Hohlraum des Lippenelements eingeführt usw..

Des Weiteren ist bei dem in Fig. 7 gezeigten Ausführungsbeispiel das Lippenelement 7 als separates Teil an dem Leistenelement 6 befestigt. Dadurch können das Lippenelement 7 und das Leistenelement 6 nicht nur aus demselben Material oder aus derselben Materialkombination sondern auch sehr leicht aus unterschiedlichen Materialien oder unterschiedlichen Materialkombinationen hergestellt sein. Je nachdem, ob der jeweils wenigstens ein Lichtleiter 11 in das Lippenelement 7 oder das Leistenelement 6 integriert ist, kann dieses Teil z.B. aus Kunststoff und das andere Teil, welches keinen integrierten Lichtleiter aufweist, z.B. aus Metall, beispielsweise in Form eines Metallblechs oder eines Metallgussteils usw., aus Gummi, und/oder einem anderen Kunststoff usw.. hergestellt sein.

Das Leistenelement 6 weist eine Halterung 20 zum Aufnehmen und Halten eines Befestigungsabschnitts 22 des Lippenelements 7 auf. Die Halterung 20 ist, wie in Fig. 7 gezeigt ist, beispielsweise als eine Nut 21 mit einer Hinterschneidung ausgebildet. Die Nut 21 mit der Hinterschneidung erstreckt sich z.B. in Längsrichtung des Leistenelements 6 in Fig. 7 und ist an wenigstens einem Ende offen ausgebildet, zum Einführen oder Einschieben des Befestigungsabschnitts 22 des Lippenelements 7.

In dem Ausführungsbeispiel wie es in Fig. 7 gezeigt ist, weist die Nut 21 einen viereckigen Querschnitt auf zum Aufnehmen des dazu korrespondierenden Befestigungsabschnitts 22, welcher ebenfalls einen viereckigen Querschnitt aufweist. Die Nut 21 und entsprechend der Befestigungsabschnitt 22 des Lippenelements 7 können einen beliebigen Querschnitt aufweisen, beispielsweise einen runden, ovalen und/oder eckigen Querschnitt usw..

Ebenso können die Halterung 20 des Leistenelements 6 und der Befestigungsabschnitt 22 des Lippenelements 7 auch derart ausgebildet sein, dass das Lippenelement 7 mit seinem Befestigungsabschnitt 22 in der Halterung 20 einrastbar, und/oder einklemmbar ist. Dies gilt für alle Ausführungsformen der Erfindung.

Zusätzlich oder alternativ zu den zuvor genannten Befestigungsmöglichkeiten kann das Lippenelement 7 auch an dem Leistenelement 6 anklebbar, anschraubbar, verstiftbar usw. vorgesehen werden usw.. Dies gilt ebenfalls für alle Ausführungsformen der Erfindung.

In Fig. 8 ist ein Ausschnitt einer Anordnung einer erfindungsgemäßen Abdeckungseinrichtung 3 an einem gewölbten Abschnitt eines Karosseriebauteils 1 in einer stark vereinfachten und rein schematischen Querschnittansicht gezeigt. Das Karosseriebauteil 1 in dem Ausführungsbeispiel in Fig. 8 ist z.B. ein Türblech 23. Die Abdeckungseinrichtung 3 kann im Falle des Türblechs 23, falls erforderlich, als Rammschutz oder Rammschutzelement vorgesehen oder ausgebildet sein. Das Leistenelement 6 der Abdeckungseinrichtung 3 kann hierzu beispielswiese mit einer Verstärkungsstruktur, einer geeigneten Dimensionierung, einem geeigneten Material oder Materialkombination usw. ausgebildet sein. Das Rammschutzelement bildet dabei ein Funktionselement.

Die Abdeckungseinrichtung 3 ist in herkömmlicher, dem Fachmann allgemein bekannter Weise an dem gewölbten Abschnitt des Karosseriebauteils 1 befestigt. Die Befestigung der Abdeckungseinrichtung 3 ist dabei aus Gründen der Übersichtlichkeit nicht dargestellt. In dem in Fig. 8 gezeigten Ausführungsbeispiel ist an dem Leistenelement 6 der Abdeckungseinrichtung 3 auf wenigstens einer Seite wenigstens ein zusätzliches Lippenelement 7 vorgesehen. Das wenigstens eine Lippenelement 7 ist als separates Bauteil an dem Leistenelement 6 befestigt, wie zuvor z.B. mit Bezug auf Fig. 7 beschrieben wurde.

Der wenigstens eine Lichtleiter 11 ist dabei in dem Ausführungsbeispiel Fig. 8 in dem Lippenelement 7 integriert, z.B. einextrudiert. Ebenso kann der wenigstens eine Lichtleiter 11 oder wenigstens ein weiterer zusätzlicher Lichtleiter 11 auch in dem Leistenelement 6 integriert, z.B. einextrudiert usw. sein.

Das Lippenelement 7 ist in dem Ausführungsbeispiel in Fig. 8 derart vorgesehen, dass es an dem Karosseriebauteil 1 anliegt. Ebenso kann das Lippenelement mit dem darin integrierten Lichtleiter 11 auch einen Spalt mit dem Karosseriebauteil 1 bilden, je nach Funktion und Einsatzzweck.

Des Weiteren kann die mit Bezug auf Fig. 8 beschrieben Abdeckungseinrichtung 3 statt an einem gewölbten Abschnitt auch entsprechend an einem ebenen oder planen Abschnitt eines Karosseriebauteils 1 vorgesehen werden. Dies gilt für alle Ausführungsformen der Erfindung.

In Fig. 9 ist eine Anordnung einer erfindungsgemäßen Abdeckungseinrichtung 3 an einem abgestuften Abschnitt eines Karosseriebauteils 1 in einer stark vereinfachten und rein schematischen Querschnittansicht gezeigt. Das Karosseriebauteil 1 mit dem abgestuften Abschnitt ist beispielsweise ein Heckklappenblech 24.

Die Abdeckungseinrichtung 3 ist dabei beispielweise als beleuchtete Griffleiste ausgebildet, wie in Fig. 9 angedeutet ist. Die Befestigung der Abdeckungseinrichtung 3 an dem Heckklappenblech ist in Fig. 9 aus Gründen der Übersichtlichkeit nicht dargestellt. Das Befestigen solcher Abdeckungseinrichtungen 3 ist dem Fachmann jedoch allgemein bekannt.

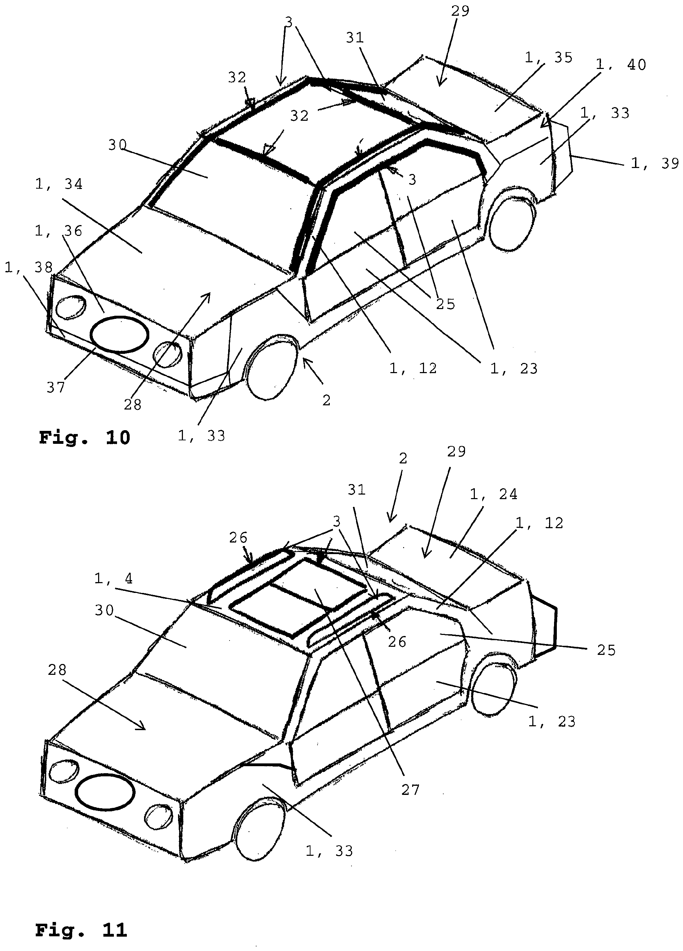

Ebenso kann die Abdeckungseinrichtung 3 auch zwischen einer Griffleiste und dem abgestuften Heckklappenblech 24 oder zwischen dem abgestuften Heckklappenblech 24 und einem nicht dargestellten Fahrzeugkennzeichen angeordnet sein. Die Erfindung ist aber auf die genannten Beispiele nicht beschränkt. Beispiele für die Anordnung einer erfindungsgemäßen Abdeckungseinrichtung 3 an diversen Karosseriebauteilen 1 mit z.B. gewölbten Abschnitten, abgestuften Abschnitten, Spalten, Vertiefungen usw. werden in nachfolgenden Fig. 10 bis 13 aufgezeigt.

Wie zuvor beispielsweise in Fig. 8, weist die Abdeckungseinrichtung 3 in Fig. 9 ein Leistenelement 6 auf, welches an dem abgestuften Abschnitt des Karosseriebauteils 1 in herkömmlicher, dem Fachmann allgemein bekannter Weise, angebracht ist. Dabei ist an dem Leistenelement 6 auf wenigstens einer Seite, beispielsweise gegenüberliegend einer Stufe des Karosseriebauteils 1 wenigstens ein zusätzliches Lippenelement 7 vorgesehen und an das Leistenelement befestigt, wie z.B. zuvor in Fig. 8 gezeigt. Das Lippen-element 7 ist als separates Bauteil an dem Leistenelement 6 befestigt vorgesehen, wie zuvor z.B. in Fig. 7 dargestellt.

In dem Ausführungsbeispiel in Fig. 9 ist wenigstens ein Lichtleiter 11 in dem Lippenelement 7 integriert, z.B. einextrudiert. Ebenso kann der wenigstens eine Lichtleiter 11 oder wenigstens ein weiterer zusätzlicher Lichtleiter 11 auch in dem Leistenelement 6 integriert, z.B. einextrudiert oder in das Lippenelement eingesetzt sein wie in Fig. 6 zuvor mit einer gestrichelten Linie angedeutet wurde. Das Lippenelement 7 kann an dem gegenüberliegenden Karosseriebauteil 1 anliegen oder mit diesem einen nicht dargestellten Spalt bilden.

In Fig. 10 ist eine stark vereinfachte und rein schematische Perspektivansicht eines Fahrzeugs mit verschiedenen Varianten zur Positionierung einer Abdeckungseinrichtung 3 gemäß der Erfindung gezeigt. Dabei wird beispielsweise eine Abdeckungseinrichtung 3 mit wenigstens einem integrierten Lichtleiter verwendet, wie zuvor beispielhaft mit Bezug auf die Fig. 5 und 7-9 beschrieben wurde. Es kann aber ebenso eine Abdeckungseinrichtung, wie sie zuvor mit Bezug auf die Fig. 1-4 beschrieben wurde, eingesetzt werden. Dies gilt für alle Ausführungsformen der Erfindung und insbesondere für die nachfolgenden mit Bezug auf die Fig. 11-13 beschriebenen Ausführungsbeispiele.

In Fig. 10 ist in einer ersten Variante, eine Abdeckungseinrichtung 3 mit wenigstens einem integrierten Lichtleiter beispielsweise als Dekorelement in Form einer Dachleiste oder als ein Funktionselement in Form einer Dachschutzleiste 32 z.B. in einer Vertiefung des Dachblechs 4 als Beispiel für ein Karosseriebauteil 1 vorgesehen. Eine solche erste Variante wurde zuvor mit Bezug auf Fig. 3 beschrieben und ist in Fig. 3 mit einer strichpunktierten Linie, sowie mit Doppelpfeilen angedeutet. Die Abdeckungseinrichtung 3 in dem Dachblech 4 kann dabei in Längs- und/oder Querrichtung des Dachblechs 4 in Fig. 10 und insbesondere teilweise oder vollständig um das Dachblech 4 umlaufend vorgesehen sein. Entlang der Vertiefung des Dachblechs 4 ist wenigstens eine Abdeckungseinrichtung 3 angeordnet. Die Abdeckungseinrichtung 3 verläuft dabei entlang zumindest einer Teillänge oder entlang der gesamten Länge der Vertiefung des Dachblechs 4. Auf diese Weise kann beispielsweise ein Teil oder die gesamte Kontur des Dachblechs 4 beleuchtet und dadurch z.B. das Auffinden des Fahrzeugs bei Dunkelheit erheblich vereinfacht werden, wenn beispielsweise von oberhalb auf einen Parkplatz geblickt wird, auf welchem das Fahrzeug steht.

Die Abdeckungseinrichtung 3 kann als Dachleiste oder Dachschutzleiste 32 außerdem statt an dem Dachblech 4 auch an einem an das Dachblech 4 angrenzenden Seitenwandblech 12 vorgesehen sein. Hierbei kann die Abdeckungseinrichtung z.B. ebenfalls in einer, sofern vorhanden, Vertiefung des Seitenwandblechs 12 aufgenommen und befestigt sein. In montiertem Zustand kann die Abdeckungseinrichtung 3 dabei zumindest einen Teil der Vertiefung abdecken.

Ebenso kann die Abdeckungseinrichtung 3 als Dachleiste oder Dachschutzleiste 32 auch in einem Übergangsbereich oder Fugenspalt zwischen dem Dachblech 4 und dem Seitenwandblech 12, der Frontscheibe 30 und dem Seitenwandblech 12, und/oder der Heckscheibe 12 und dem Seitenwandblech 12 vorgesehen sein. Dabei kann die Abdeckungseinrichtung 3 an dem Dachblech 4, dem Seitenwandblech 12, der Frontscheibe 30 und/oder der Heckscheibe 31 befestigt sein.

Statt eines durchgehenden oder einstückigen Seitenwandblechs 12, welches sich z.B. von der A-Säule, zu der B-, C- oder D-Säule erstreckt, können ebenso mehrere Seitenwandbleche 12 vorgesehen sein, entlang derer sich die wenigstens eine Abdeckungseinrichtung 3 erstreckt. Dies gilt für alle Ausführungsformen der Erfindung.

In einer weiteren Variante kann die Abdeckungseinrichtung 3 beispielsweise als Dekorelement, z.B. Zierleiste, insbesondere Regenzierleiste, an dem Seitenwandblech 12 oder den Seitenwandblechen 12 vorgesehen sein, welche einen Seitenwandrahmen des Fahrzeugs 2 bilden.

Entsprechend kann die Abdeckungseinrichtung 3 auch als Dekorelement, z.B. Zierleiste, insbesondere Türzierleiste, an dem Türblech 23, welches einen Türrahmen des Fahrzeugs 2 bildet, vorgesehen sein. Insbesondere kann die Abdeckungseinrichtung 3 mit wenigstens einem integrierten Lichtleiter beispielsweise in einem Übergangsbereich oder Fugenspalt zwischen dem Türblech 23 und einer Seitenscheibe 25 als Fahrzeugelement vorgesehen werden. Die Abdeckungseinrichtung 3 wird dabei z.B. an dem Türblech 23 befestigt. Des Weiteren kann die Abdeckungseinrichtung 23 beispielsweise zumindest teilweise oder vollständig umlaufend um die Scheibenöffnung an dem Türblech 23 angeordnet sein und so die Kontur der Seitenscheibe des Fahrzeugs beleuchten, was bei Dunkelheit das Auffinden des Fahrzeugs ebenfalls verbessert.

Die Abdeckungseinrichtung 3 kann an dem Seitenwandblech 12 beispielsweise als Regenzierleiste und entsprechend an dem Türblech 23 z.B. als Türzierleiste befestigt sein und optional zusätzlich in einer Vertiefung des Seitenwandblechs 12 oder Türblechs 23, sofern vorhanden, aufgenommen sein.

Das Leistenelement der Abdeckungseinrichtung 3 in den zuvor beschriebenen Varianten, sowie noch mit Bezug auf die Fig. 11-13 folgenden Variante, weist zusätzlich an wenigstens einer Seite wenigstens ein zusätzliches Lippenelement auf. Das Lippenelement kann in eingebautem Zustand dabei z.B. einen Teil des jeweiligen Karosseriebauteils 4, der Frontscheibe 30 als Fahrzeugelement, der Heckscheibe 31 als Fahrzeugelement, einer Seitenscheibe in der Tür usw., ab- oder überdecken.

In Fig. 11 ist eine Perspektivansicht eines Fahrzeugs 2 mit weiteren Varianten zur Positionierung einer Abdeckungseinrichtung 3 gemäß der Erfindung gezeigt. Die Abdeckungseinrichtung 3 mit beispielsweise wenigstens einem integrierten Lichtleiter wird dabei in einer Variante in eine Dachreling 26 integriert. Dazu wird die Abdeckungseinrichtung 3 an der Dachreling 26 in Längsrichtung befestigt. Die Dachreling 26 kann optional zusätzlich mit einer Vertiefung oder Abstufung in Längsrichtung versehen sein, in welcher die Abdeckungseinrichtung 3 aufnehmbar und durch die Abdeckungseinrichtung 3 zumindest teilweise abdeckbar ist. Ebenso kann auch in einer weiteren Variante das Leistenelement 16 selbst als Dachreling 26 fungieren oder ausgebildet sein. Dabei kann wie zuvor beschrieben, der wenigstens eine Lichtleiter in das Leistenelement integriert, z.B. in das Leistenelement eingegossen, einextrudiert oder in einen Hohlraum des Leistenelements eingeführt sein, um nur einige Beispiele zu nennen. Das Leistenelement ist auf wenigstens einer Seite mit wenigstens einem zusätzlichen Lippenelement versehen.

In einer anderen Variante kann die Abdeckungseinrichtung 3 in einem Übergangsbereich oder Fugenspalt zwischen dem Dachblech 4 als Karosseriebauteil 1 und einem Schiebendach 27 oder zwischen dem Dachblech 4 und einem nicht dargestellten Glasdach vorgesehen sein. Dabei kann die Abdeckungseinrichtung 3 beispielsweise an dem Dachblech 4 und/oder dem Schiebdach 27 bzw. an dem Dachblech 4 und/oder dem Glasdach zumindest in Längsrichtung und/oder Querrichtung vorgesehen und an dem Dachblech 4 als Karosseriebauteil 1 und/oder dem Schiebedach 27 bzw. dem Dachblech 4 und/oder dem Glasdach befestigt sein. Die Abdeckungseinrichtung 3 kann dabei z.B. zumindest teilweise oder vollständig umlaufend um eine Schiebedachöffnung oder um das Glasdach angeordnet sein. Das Schiebedach und das Glasdach bilden jeweils Fahrzeugelemente.

Optional kann das Dachblech 4 eine Vertiefung aufweisen, in welcher die Abdeckungseinrichtung 3 aufgenommen wird. Die Abdeckungseinrichtung 3 kann die Vertiefung in eingebautem Zustand z.B. zumindest teilweise abdecken. Dabei kann die Abdeckungseinrichtung 3 außerdem zumindest teilweise umlaufend um das Schiebedach 27 oder Glasdach angeordnet sein.

Durch das Beleuchten z.B. von Abschnitten oder Bereichen des Fahrzeugdachs und/oder einer Dachreling 26 usw. kann das Fahrzeug bei Dunkelheit leicht aufgefunden werden. Dies ist insbesondere vorteilhaft, wenn der Fahrzeuginhaber beispielsweise von einer erhöhten Position, z.B. von oberhalb auf einen Parkplatz, auf sein Fahrzeug herabblickt. Auf diese Weise kann der Fahrzeuginhaber das Fahrzeug 2 leicht ausmachen. Insbesondere kann durch eine Beleuchtung zumindest von Abschnitten der Fahrzeugkontur mittels wenigstens einer Abdeckungseinrichtung 3, ein Fahrzeuginhaber einfach unterscheiden, ob es sich bei dem beleuchteten Gegenstand um ein Fahrzeug, um seinen Fahrzeugtyp, oder einen ganz anderen Gegenstand handelt. Des Weiteren kann ein mittels wenigstens einer Abdeckungseinrichtung 3 beleuchteter Abschnitt des Fahrzeugdachs, der Motorhaube 28, der Frontscheibe 30, der Heckscheibe 31 und/oder der Heckklappe 29 usw. beispielsweise bei einem Unfall, das Fahrzeug 2 von oben durch einen Rettungshubschrauber leichter geortet werden.

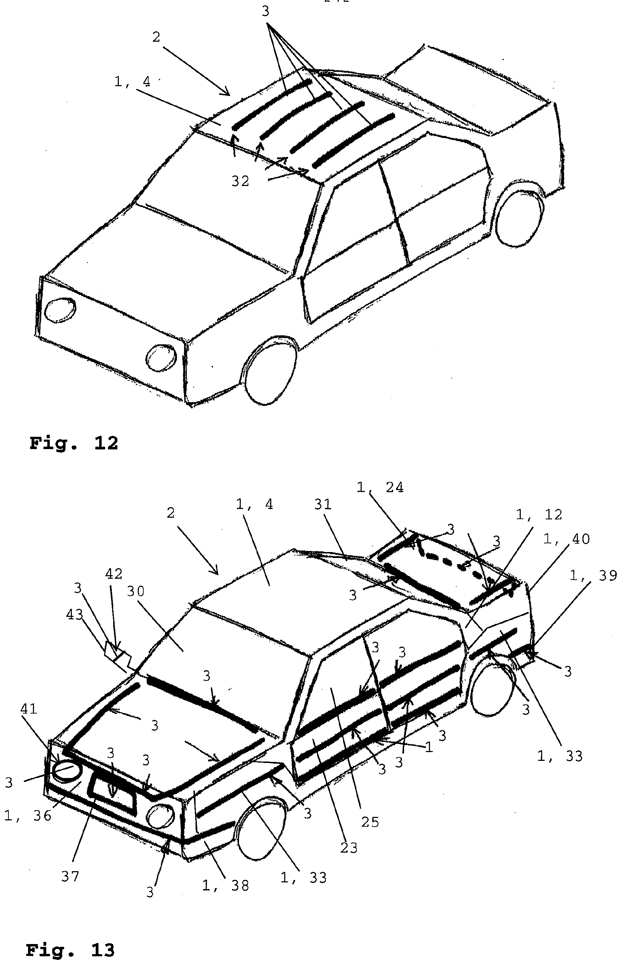

In Fig. 12 ist eine Perspektivansicht eines Fahrzeugs 2 mit noch einer weiteren Variante zur Positionierung einer Abdeckungseinrichtung 3 gemäß der Erfindung gezeigt. Die Abdeckungseinrichtung 3 mit beispielsweise wenigstens einem integrierten Lichtleiter bildet dabei in einer Variante eine Dachschutzleiste 32 oder wird in eine Dachschutzleiste integriert. Solche Dachschutzleisten 32, wie sie in Fig. 12 gezeigt sind, werden beispielsweise zum Schutz unter Dachlastträgern angebracht.

Zum Integrieren der Abdeckungseinrichtung 3 in die Dachschutzleiste 32, wird die Abdeckungseinrichtung 3 an der Dachschutzleiste 32 in Längsrichtung befestigt. Hierbei kann die Dachschutzleiste 32 optional zusätzlich mit einer Vertiefung oder Abstufung in Längsrichtung versehen sein, in welcher die Abdeckungseinrichtung 3 aufnehmbar ist. Die Vertiefung oder Abstufung kann z.B. durch die Abdeckungseinrichtung 3 in montiertem Zustand außerdem zumindest teilweise abdeckgedeckt werden.

Wie zuvor beschrieben, kann in einer weiteren Variante das Leistenelement der Abdeckungseinrichtung 3 selbst als Dachschutzleiste 32 fungieren oder ausgebildet sein. Hierbei kann, wie zuvor beschrieben, der wenigstens eine Lichtleiter in das Leistenelement integriert, z.B. in das Leistenelement eingegossen, einextrudiert oder in einen Hohlraum des Leistenelements eingeführt sein usw..

Des Weiteren ist das Leistenelement bei den genannten Varianten mit wenigstens einem zusätzlichen Lippenelement versehen. Wenigstens ein Lichtleiter kann hierbei in das Lippenelement und/oder wenigstens ein Lichtleiter in das Leistenelement integriert sein. Dies gilt für alle Ausführungsformen der Erfindung.

In Fig. 13 ist des Weiteren eine Perspektivansicht eines Fahrzeugs 2 mit anderen Varianten zur Positionierung einer Abdeckungseinrichtung 3 gemäß der Erfindung dargestellt. Dabei wird eine jeweilige Abdeckungseinrichtung 3 mit wenigstens einem integrierten Lichtleiter in einer Fensterschachtabdeckung oder einem Fugenspalt zwischen dem Türblech 23 und der Seitenscheibe 25 des Fahrzeugs 2 vorgesehen. Die Abdeckungseinrichtung 3 wird dazu z.B. an dem Türblech 23 befestigt. Bei einer feststehenden nicht dargestellten Seitenscheibe, der Heckscheibe 31 oder der Frontscheibe 30 als Fahrzeugelementen, kann die jeweilige Abdeckungseinrichtung 3 zusätzlich oder ausschließlich auch an einer solchen Scheibe befestigt werden. Bei den auf- und ab beweglichen Seitenscheiben 25 der Fahrzeugtüren ist eine Abdeckungseinrichtung 3 dagegen vorzugsweise nur am Türblech 23 befestigt.

Des Weiteren kann die Abdeckungseinrichtung 3 auch in einem Übergangsbereich oder Fugenspalt zwischen der Frontscheibe 30 als Fahrzeugelement und der Motorhaube 28 als Karosseriebauteil 1 vorgesehen werden. Die Abdeckungseinrichtung 3 kann dabei an der Motorhaube 28 und/oder der Frontscheibe 30 befestigt werden. Optional kann die Motorhaube 28 mit einer zusätzlichen Vertiefung zur Aufnahme der Abdeckungseinrichtung 3 versehen sein, wobei die Abdeckungseinrichtung 3 die Vertiefung in eingebautem Zustand z.B. zumindest teilweise abdeckt.

In einer weiteren Variante kann die Abdeckungseinrichtung 3 in einem Übergangsbereich oder Fugenspalt zwischen der Heckscheibe 31 und der Heckklappe 29 als Karosseriebauteil 1 vorgesehen werden und dabei beispielsweise an der Heckscheibe 31 und/oder der Heckklappe 29 befestigt werden. Optional kann die Heckklappe 29 ebenfalls mit einer zusätzlichen Vertiefung zur Aufnahme der Abdeckungseinrichtung 3 versehen sein, wobei die Abdeckungseinrichtung 3 die Vertiefung in eingebautem Zustand z.B. zumindest teilweise abdeckt.

Gemäß einer Variante kann die Abdeckungseinrichtung 2 in einem Fugenspalt oder seitlichen Fuge zwischen dem Heckklappenblech 24 und einem Seitenwandblech 12 oder zwischen dem Heckklappenblech 24 und einem Kotflügelblech 33 vorgesehen werden. Die Abdeckungseinrichtung 3 kann dabei beispielsweise an dem Heckklappenblech 24 und/oder dem Seitenwandblech 12 oder entsprechend an dem Heckklappenblech 24 und/oder dem Kotflügelblech 33 befestigt sein. Die Abdeckungseinrichtung 3 kann des Weiteren auch in einer Vertiefung des Heckklappenblechs 24, des Kotflügelblechs 33 oder des Seitenwandblechs 12 aufgenommen und befestigt sein. Die Vertiefung kann durch die Abdeckungseinrichtung 3 in montiertem Zustand z.B. zumindest teilweise abdeckgedeckt werden. Das Anordnen einer erfindungsgemäßen Abdeckungseinrichtung 3 in einer Vertiefung ist zuvor bereits z.B. in Fig. 1, 2 und 5 gezeigt und beschrieben-

In einer weiteren Variante kann die Abdeckungseinrichtung 3 auch in einem Fugenspalt oder seitlichen Fuge zwischen dem Motorhaubenblech 34 und einem Seitenwandblech 12 oder zwischen dem Motorhaubenblech 34 und dem Kotflügelblech 33 vorgesehen werden. Die Abdeckungseinrichtung 3 kann dabei beispielsweise an dem Motorhaubenblech 34 oder dem Seitenwandblech 12 oder dem Kotflügelblech 33 befestigt sein. Das jeweilige Blech, an welchem die Abdeckungseinrichtung 3 befestigt wird, kann optional zusätzlich eine Vertiefung zur Aufnahme der Abdeckungseinrichtung 3 aufweisen, wobei die Abdeckungseinrichtung 3 in montiertem Zustand die Vertiefung z.B. zumindest teilweise abdeckt.

In einer Variante kann die Abdeckungseinrichtung 3 des Weiteren in einer Fuge oder einem Fugenspalt des Heckklappenblechs 35 als Karosseriebauteil 1 vorgesehen und an dem Heckklappenblech 35 befestigt sein. Ebenso kann die Abdeckungseinrichtung 3 auch z.B. als Dekorleiste oder Griffleiste des Karosseriebauteils 1, hier z.B. des Heckklappenblechs 35, ausgebildet oder in die Dekorleiste oder Griffleiste integriert sein, wie zuvor für ein Ausführungsbeispiel in Fig. 9 beschrieben wurde.

Wie in Fig. 13 in einer weiteren Variante gezeigt ist, kann die Abdeckungseinrichtung 3 auch in einer Fuge, einem vorderen Fugenbereich oder Fugenspalt des Motorhaubenblechs 34 und eines Frontschürzenblechs 36 vorgesehen sein. Die Abdeckungseinrichtung 3 kann, wie zuvor beschrieben, z.B. an dem Motorhaubenblech 34 oder dem Frontschürzenblech 36 befestigt sein und beispielsweise in Querrichtung oder zusätzlich auch in Längsrichtung der Motorhaube bzw. der Frontschürze verlaufen.

Des Weiteren kann die Abdeckungseinrichtung 3 in einer Variante in Fig. 13 auch in einem Übergangsbereich oder Fugenspalt zwischen der Frontschürze bzw. dem Frontschürzenblech 36 als Karosseriebauteil 1 und einem Kühlergrill 37 vorgesehen sein. Die Abdeckungseinrichtung 3 kann dabei zumindest teilweise umlaufend um den Kühlergrill 37 vorgesehen und an dem Frontschürzenblech 36 und/oder dem Kühlergrill 37 befestigt sein. Das Frontschürzenblech 36 oder der Kühlergrill 37 kann optional eine Vertiefung aufweisen, in welcher die Abdeckungseinrichtung 3 aufgenommen ist. Dabei kann die Abdeckungseinrichtung 3 die Vertiefung z.B. zumindest teilweise abdecken.

Außerdem kann die Abdeckungseinrichtung 3 in einer weiteren Variante an dem vorderen oder hinteren Kotflügelblech 33 als jeweiligem Karosseriebauteil 1 z.B. in ein dortiges Dekorelement, z.B. eine Zierleiste, integriert sein. Ebenso kann die Abdeckungseinrichtung 3 selbst als beleuchtetes Dekorelement, z.B. beleuchtete Zierleiste, an dem vorderen oder hinteren Kotflügelblech 33 vorgesehen und befestigt sein, um ein Auffinden des Fahrzeugs 2 bei Dunkelheit durch das beleuchtete Dekorelement zu erleichtern.

In einer anderen Variante kann die Abdeckungseinrichtung 3, an dem Türblech 23, an einem vorderen Stoßstangenblech 38, an einem hinteren Stoßstangenblech 39, an dem Frontschürzenblech 36 oder an dem Heckschürzenblech 40 als Karosseriebauteilen 1 vorgesehen sein, um das jeweilige Karosseriebauteil 1 zu beleuchten oder zu illuminieren. Insbesondere kann die Abdeckungseinrichtung 3 dabei als Zierleiste oder Rammschutzleiste an dem jeweiligen Blech bzw. Karosseriebauteil 1, wie zuvor mit Bezug auf Fig. 8 beschrieben wurde, vorgesehen sein.

Die Abdeckungseinrichtung 3 ist dabei an dem jeweiligen zu beleuchtenden Karosseriebauteil 1 als beleuchtete Rammschutzleiste oder Zierleiste ausgebildet oder in eine dortige Rammschutzleiste oder Zierleiste integriert. Dabei kann die Rammschutzleiste oder Zierleiste eine Vertiefung zur Aufnahme der Abdeckungseinrichtung 3 aufweisen, welche durch die Abdeckungseinrichtung 3 in eingebautem Zustand z.B. abdeckbar ist.

Ebenso kann die Abdeckungseinrichtung 3 auch beispielsweise in der Fuge oder einem Fugenspalt zwischen einer Fahrzeugleuchte 41, z.B. dem Rücklicht oder Vorderlicht, und dem Heckschürzenblech 40 oder hinterem Stoßstangenblech bzw. dem Frontschürzenblech 36 oder dem vorderen Stoßstangenblech 38 vorgesehen sein. Mittels der Abdeckungseinrichtung 3 kann das Fahrzeug 2 im Bereich der Fahrzeugscheinwerfer 41 beleuchtet werden, auch wenn der Fahrer die Fahrzeugscheinwerfer 41 selbst nicht eingeschaltet hat, da er sich z.B. nicht im Fahrzeug sondern auf dem Weg zu seinem Fahrzeug befindet. Die Abdeckungseinrichtung 3 kann dabei an dem Fahrzeugscheinwerfer 41 und/oder dem Karosseriebauteil 1 befestigt sein.

In einer weiteren Variante kann die Abdeckungseinrichtung 3 auch an dem Fahrzeugspiegel 42, beispielsweise in einer Fuge oder einem Fugenspalt zwischen dem Gehäuse 43 des Fahrzeugspiegels 42 und dem Spiegel vorgesehen und an dem Gehäuse 43 befestigt sein. Des Weiteren kann die Abdeckungseinrichtung 3 auch an jeder anderen Position außen an dem Gehäuse 43 des Fahrzeugspiegels 42 befestigt sein. Der Fahrzeugspiegel und das Fahrzeugspiegelgehäuse bilden Fahrzeugelemente.

Das Beleuchten des Fahrzeugs 2 mittels wenigstens einer Abdeckungseinrichtung 3, wie sie zuvor beispielhaft mit Bezug auf die Fig. 1-13 beschrieben wurde, hat den Vorteil, dass das Fahrzeug 2 beispielsweise bei Dunkelheit leichter durch den Fahrzeuginhaber gefunden werden kann. Ebenso kann die Beleuchtung mittels der Abdeckungseinrichtung 3 auch dazu genutzt werden, mittels der Beleuchtung insbesondere bei Dunkelheit zu verhindern, dass ein anderes Fahrzeug beispielsweise den Fahrzeugspiegel beim Vorbeifahren in einer engen Gasse übersieht und beschädigt. Gleiches gilt auch beim Parken z.B. bei Dunkelheit. Hier können beleuchtete Konturen des Fahrzeugs 2, z.B. der Motorhaube, des Kühlergrills, des Dachs, der Scheiben, sowie beleuchtete Funktionsteile, wie z.B. Rammschutzleisten, und/oder beleuchtete Dekorleisten, wie z.B. Zierleisten, dazu dienen, dass ein anderer Fahrzeugführer, beispielsweise beim Einparken bei Dunkelheit das Fahrzeug 2 durch dessen wenigstens eine beleuchtete Abdeckeinrichtung 3 besser erfasst. Hierdurch kann ein ungewolltes Touchieren des anderen Fahrzeugs besser verhindert werden. Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die in den Fig. 1 bis 13 gezeigten Ausführungsbeispiele sind auch miteinander kombinierbar, insbesondere einzelne Merkmale davon.

Insbesondere ist die Erfindung auch nicht auf die Karosseriebauteile beschränkt, wie sie in Fig. 1-5 und 7-13 beispielhaft gezeigt sind. So können z.B. das in Fig. 3, 4 und 10 bis 13 gezeigte Dachblech und die Seitenwandbleche auf beiden Seiten des Fahrzeugs z.B. zu einem durchgehenden oder gemeinsamen Blech zusammengefasst werden. Ebenso kann das Seitenwandblech beispielsweise mit wenigstens einem Blech für die A-, B-, C-oder D-Säule zusammengefasst werden. Die Erfindung ist des Weiteren nicht auf die Form des Leistenelements und der Lippenelemente beschränkt, wie sie in den Fig. 1 bis 9 gezeigt sind. Das Leistenelement und das jeweilige Lippenelement können jede Form aufweisen, die geeignet ist, eine Vertiefung, Spalt oder Fugenspalt in einem Karosseriebauteil oder von zwei Karosseriebauteilen zumindest teilweise abzudecken.

Des Weiteren kann die Abdeckungseinrichtung 3 an jeder anderen Position außen am Fahrzeug 2 angeordnet und an jedem Karosseriebauteil 1, an jeder Scheibe, jedem Griff, jedem Dekorelement, jedem Funktionselement usw. befestigt oder integriert werden. Die Abdeckungseinrichtung kann des Weiteren auch als Griff, Dekor- oder Funktionselement ausgebildet werden. Des Weiteren kann die Abdeckungseinrichtung oder zumindest ein Teil, wie zuvor beispielhaft mit Bezug auf die Fig. 1-13 beschrieben wurde, auch zusätzlich farbig beleuchtet ausgebildet sein, beispielsweise durch Verwenden von z.B. farbigen LEDs und/oder indem das zumindest teilweise transparenten oder transluzentes Material der Abdeckungseinrichtung 3 optional zusätzlich farbig eingefärbt ist zum farbigen Beleuchten der Abdeckungseinrichtung 3.

Die mit Bezug auf die Fig. 1-13 aufgeführten Bleche, wie z.B. das Seitenwandblech, Türblech, Heckklappenblech, Kotflügelblech, Motorhaubenblech, Heckklappenblech, Frontschürzenblech, Heckschürzenblech, Stoßstangenblech usw. können Metallbelche aber ebenso beispielsweise Kunststoffbleche oder eine Kombination aus Metall-, Kunststoff- und faserverstärktem Kunststoffblech usw. sein. Die Erfindung ist auf Metall-, Kunststoff- und faserverstärkte Kunststoffbleche, sowie Kombinationen davon nicht beschränkt.

### Bezugszeichenliste

- 1: Karosseriebauteil
- 2: Fahrzeug
- 3: Abdeckungseinrichtung
- 4: Dachblech
- 5: Vertiefung
- 6: Leistenelement
- 7: Lippenelement
- 8: Spalt
- 9: Beleuchtungseinrichtung
- 10: Lichtquelle
- 11: Lichtleiter
- 12: Seitenwandblech
- 13: Öffnung
- 14: Frontscheibe
- 15: Heckscheibe
- 16: A-Säule
- 17: B-Säule
- 18: C-Säule
- 19: D-Säule
- 20: Halterung
- 21: Nut
- 22: Befestigungsabschnitt
- 23: Türblech
- 24: Heckklappenblech
- 25: Seitenscheibe
- 26: Dachreling
- 27: Schiebedach
- 28: Motorhaube
- 29: Heckklappe
- 30: Frontscheibe
- 31: Heckscheibe
- 32: Dachschutzleiste
- 33: Kotflügelblech
- 34: Motorhaubenblech
- 35: Heckklappenblech
- 36: Frontschürzenblech
- 37: Kühlergrill
- 38: vorderes Stoßstangenblech
- 39: hinteres Stoßstangenblech
- 40: Heckschürzenblech
- 41: Fahrzeugleuchte
- 42: Fahrzeugspiegel
- 43: Gehäuse des Fahrzeugspiegels

## Patentansprüche

1. Abdeckungseinrichtung (3) zur zumindest teilweisen Abdeckung einer Vertiefung (5), eines ebenen Abschnitts, eines gewölbten Abschnitts und/oder eines abgestuften Abschnitts wenigstens eines Karosseriebauteils (1) und/oder eines Fahrzeugelements (25, 27, 30, 31, 37, 41, 42, 43) eines Fahrzeugs (2), wobei die Abdeckungseinrichtung (3) eine Beleuchtungseinrichtung (9) aufweist oder mit einer Beleuchtungseinrichtung (9) koppelbar ist, wobei die Abdeckungseinrichtung (3) ein Leistenelement (6) aufweist,
**dadurch gekennzeichnet, dass**
die Abdeckungseinrichtung (3) auf wenigstens einer Längsseite wenigstens ein Lippenelement (7) aufweist, welches mit dem Leistenelement (6) lösbar verbunden ist, und dass die Abdeckungseinrichtung (3) derart ausgebildet ist, dass das Leistenelement (6) und/oder das wenigstens eine Lippenelement (7) mittels der Beleuchtungseinrichtung (9) durchleuchtbar ist.

2. Einrichtung nach Anspruch 1,
**dadurch gekennzeichnet,**
**dass** die Abdeckungseinrichtung (3) auf wenigstens einer Längsseite wenigstens ein weiteres Lippenelement (7) aufweist, welches mit dem Leistenelement (6) fest verbunden ist, und/oder dass das wenigstens eine Lippenelement (7) an dem Leistenelement (16) als separates Bauteil und insbesondere durch Kleben, Verrasten und/oder Verklemmen befestigt ist, wobei das Leistenelement (6) wenigstens eine Halterung (20) aufweist zum Aufnehmen wenigstens eines Befestigungsabschnitts (22) des Wenigstens einen Lippenelements (7), wobei die Halterung (20) vorzugsweise als Nut (21) mit einer Hinterschneidung ausgebildet ist.

3. Einrichtung nach Anspruch 2,
**dadurch gekennzeichnet,**
**dass** das Leistenelement (6) und/oder das wenigstens eine Lippenelement (7) zum Durchleuchten mittels der Beleuchtungseinrichtung (9) aus einem zumindest teil-transparenten, transluzenten oder opaken Material hergestellt ist/sind, wobei wenn das Leistenelement (6) und/oder das wenigstens eine Lippenelement (7) aus einem opaken Material ist/sind, das Leistenelement (6) und/oder das wenigstens eine Lippenelement (7) wenigstens eine Öffnung (13) zum Hindurchleuchten mittels der Beleuchtungseinrichtung (9) aufweist/aufweisen.

4. Einrichtung nach einem der vorstehenden Ansprüche,
**dadurch gekennzeichnet,**
**dass** die Beleuchtungseinrichtung (9) wenigstens eine Lichtquelle (10) und/oder wenigstens ein Nachleuchtpigment aufweist, welches Material der Abdeckungseinrichtung (3) beigemischt oder als Nachleuchtfarbe, Nachleuchtfolie oder Nachleuchtlack auf die Außenseite der Abdeckungseinrichtung (3) aufgebracht ist,
wobei die Lichtquelle (10) vorzugsweise eine Leuchtdiode, eine organische Leuchtdiode, eine Elektrolumineszenz-Folie, eine Glühbirne, eine Halogenlampe, eine Gasentladungslampe oder ein Laser ist.

5. Einrichtung nach einem der vorstehenden Ansprüche,
**dadurch gekennzeichnet,**
**dass** die Abdeckungseinrichtung (3) ein Dekorelement, insbesondere eine Zierleiste, und/oder ein Funktionselement, insbesondere eine Dachschutzleiste (32), Dachreling (26), Griffleiste oder eine Rammschutzleiste, ist, und/oder dass die Abdeckungseinrichtung (3) wenigstens einen Lichtleiter (11) aufweist, welcher in die Abdeckungseinrichtung (3) integriert ist,
wobei der wenigstens eine Lichtleiter (11) vorzugsweise integral oder als separates Bauteil in die Abdeckungseinrichtung (3) integriert ist, und/oder
wobei der wenigstens eine Lichtleiter (11) in die Abdeckungseinrichtung (3) einextrudiert, eingespritzt und/oder in wenigstens einen Hohlraum der Abdeckungseinrichtung (3) angeordnet ist, und/oder
wobei der Lichtleiter (11) mit der wenigstens einen Lichtquelle (10) koppelbar ist, wobei der Lichtleiter (11) insbesondere ein strangförmiger Lichtleiter, eine lichtleitende Folie und/oder ein lichtleitendes Gewebe ist.

6. System, aufweisend eine Abdeckungseinrichtung (3) nach einem der vorstehenden Ansprüche und eine Beleuchtungseinrichtung (9).

7. System nach Anspruch 6,
**dadurch gekennzeichnet,**
**dass** die Beleuchtungseinrichtung (9) wenigstens eine Lichtquelle (10) und/oder wenigstens ein Nachleuchtpigment aufweist, welches dem Material der Abdeckungseinrichtung beigemischt oder als Nachleuchtfarbe, Nachleuchtfolie oder Nachleuchtlack auf die Außenseite der Abdeckungseinrichtung (3) aufgebracht ist und wobei die Lichtquelle (10) insbesondere eine Leuchtdiode, eine organische Leuchtdiode, eine Elektrolumineszenz-Folie, eine Glühbirne oder ein Laser ist und
wobei die Beleuchtungseinrichtung (9) vorzugsweise wenigstens einen Lichtleiter (11) aufweist, welcher mit der wenigstens einen Lichtquelle (10) koppelbar ist, wobei der Lichtleiter (11) insbesondere ein strangförmiger Lichtleiter, eine lichtleitende Folie oder ein lichtleitendes Gewebe ist.

8. Karosseriebauteil (1) eines Fahrzeugs (2), welches wenigstens einen ebenen Abschnitt, wenigstens einen gewölbten Abschnitt, wenigstens einen abgestuften Abschnitt und/oder eine Vertiefung (5) aufweist, wobei der ebene Abschnitt, der gewölbte Abschnitt, der abgestufte Abschnitt und/oder die Vertiefung (5) zumindest teilweise durch wenigstens eine Abdeckungseinrichtung (3) gemäß einem der Ansprüche 1 bis 5 abgedeckt und zumindest der eine Abschnitt der Abdeckungseinrichtung (3) mittels der Beleuchtungseinrichtung (9) durchleuchtet wird.

9. Karosseriebauteil nach Anspruch 8,
**dadurch gekennzeichnet,**
**dass** die Beleuchtungseinrichtung (9) Teil des Karosseriebauteils (1) und/oder Teil der Abdeckungseinrichtung (3) ist, und/oder
wobei das Karosseriebauteil (1) ein Dachblech (4), ein Türblech (23), ein Kotflügelblech (33), ein Motorhaubenblech (34), ein Heckklappenblech (35), ein Frontschürzenblech (36), ein vorderes Stoßstangenblech (38), ein hinteres Stoßstangenblech (39), ein Heckschürzenblech (40) oder ein Seitenwandblech (12) eines Fahrzeugs (2) ist.

10. Karosseriebauteil-System, aufweisend ein erstes und zweites Karosseriebauteil (1),
- wobei das erste und zweite Karosseriebauteil (1) zusammen eine Vertiefung (5), insbesondere einen Spalt oder Fugenspalt, bilden,
- wobei die Vertiefung (5) zumindest teilweise durch wenigstens eine Abdeckungseinrichtung (3) gemäß einem der Ansprüche 1 bis 5 abgedeckt wird und
- wobei zumindest der eine Abschnitt der Abdeckungseinrichtung (3) mittels einer Beleuchtungseinrichtung (9) durchleuchtet wird.

11. Karosseriebauteil-System, aufweisend ein Karosseriebauteil (1) und ein Fahrzeugelement (25, 27, 30, 31, 37, 41, 42, 43),
- wobei das Karosseriebauteil (1) und das Fahrzeugelement zusammen eine Vertiefung (5), insbesondere eine Fuge oder Fugenspalt bilden,
- wobei die Vertiefung (5) zumindest teilweise durch wenigstens eine Abdeckungseinrichtung (3) gemäß einem der Ansprüche 1 bis 5 abgedeckt und
- wobei zumindest der eine Abschnitt der Abdeckungseinrichtung (3) mittels der Beleuchtungseinrichtung (9) durchleuchtet wird.

12. Karosseriebauteil-System, aufweisend ein Karosseriebauteil (1) und ein Fahrzeugelement (25, 27, 30, 31, 37, 41, 42, 43),
- wobei das Karosseriebauteil (1) oder das Fahrzeugelement eine Vertiefung (5), einen ebenen Abschnitt, einen gewölbten Abschnitt und/oder einen abgestuften Abschnitt aufweist,
- wobei die Vertiefung (5), der ebene Abschnitt, der gewölbte Abschnitt und/oder der abgestufte Abschnitt zumindest teilweise durch wenigstens eine Abdeckungseinrichtung (3) gemäß einem der Ansprüche 1 bis 5 abgedeckt und
- wobei zumindest der eine Abschnitt der Abdeckungseinrichtung (3) mittels der Beleuchtungseinrichtung (9) durchleuchtet wird.

13. System nach Anspruch 11 oder 12,
**dadurch gekennzeichnet,**
**dass** das Fahrzeugelement eine Seitenscheibe (25), ein Schiebedach (27), ein Glasdach, eine Frontscheibe (30), eine Heckscheibe (31), ein Kühlergrill (37), eine Fahrzeugleuchte (41), ein Fahrzeugspiegel (42) oder ein Fahrzeugspiegelgehäuse (43) ist, und/oder
wobei die Beleuchtungseinrichtung (9) Teil wenigstens eines der Karosseriebauteile (1), wenigstens eines Fahrzeugelements (25, 27, 30, 31, 37, 41, 42, 43) und/oder Teil der Abdeckungseinrichtung (3) ist, und/oder
wobei das erste Karosseriebauteil (1) ein Dachblech (4) und das zweite Karosseriebauteil (1) ein Seitenwandblech (12) ist.

14. Fahrzeug (1), insbesondere Kraftfahrzeug,
mit einem Karosseriebauteil (1) nach einem der Ansprüche 8 bis 9 und/oder einem Karosseriebauteil-System nach einem der Ansprüche 10 bis 13.

15. Fahrzeug nach Anspruch 14,
**dadurch gekennzeichnet,**
**dass** die Abdeckungseinrichtung (3) sich entlang einer Vertiefung (5) des Karosseriebauteils (1) oder des Karosseriebauteil-Systems in Längsrichtung des Fahrzeugs (2) und/oder in Querrichtung des Fahrzeugs (2) erstreckt,
wobei die Abdeckungseinrichtung (3) sich vorzugsweise entlang einer Vertiefung (5) des ersten oder zweiten Karosseriebauteils (1) des Karosseriebauteil-Systems nach Anspruch 10 oder entlang einer gemeinsamen Vertiefung des ersten und zweiten Karosseriebauteils (1) des Karosseriebauteil-Systems nach Anspruch 10 in Längsrichtung des Fahrzeugs (2) und/oder in Querrichtung des Fahrzeugs (2) erstreckt, und
wobei die Abdeckungseinrichtung (3) sich insbesondere entlang einer Vertiefung (5) des Karosseriebauteils (1) oder des Fahrzeugelements (25, 27, 30, 31, 37, 41, 42, 43) des Karosseriebauteil-Systems nach einem der Ansprüche 11 bis 13 entlang einer gemeinsamen Vertiefung (5) des Karosseriebauteils (1) und des Fahrzeugelements (25, 27, 30, 31, 37, 41, 42, 43) in Längsrichtung des Fahrzeugs (2) und/oder in Querrichtung des Fahrzeugs (2) erstreckt.

## Claims

1. Covering device (3) for at least partly covering a recess (5), a flat portion, a curved portion and/or a stepped portion of at least one body component (1) and/or a vehicle element (25, 27, 30, 31, 37, 41, 42, 43) of a vehicle (2), wherein the covering device (3) comprises a lighting device (9) or can be coupled to a lighting device (9), wherein the covering device (3) comprises a strip element (6), **characterised in that** the covering device (3) comprises, on at least one longitudinal side, at least one lip element (7) which is detachably connected to the strip element (6), and **in that** the covering device (3) is designed such that light from the lighting device (9) can shine through the strip element (6) and/or the at least one lip element (7).

2. Device as claimed in claim 1, **characterised in that** the covering device (3) comprises, on at least one longitudinal side, at least one further lip element (7) which is fixedly connected to the strip element (6), and/or **in that** the at least one lip element (7) is fastened to the strip element (16) as a separate component and in particular by means of adhesion, latching and/or clamping,
wherein the strip element (6) comprises at least one holder (20) for receiving at least one fastening portion (22) of the at least one lip element (7),
wherein the holder (20) is preferably in the form of a groove (21) with an undercut.

3. Device as claimed in claim 2, **characterised in that** the strip element (6) and/or the at least one lip element (7) is/are made of a material which is at least partially transparent, is translucent or is opaque so that light from the lighting device (9) can shine therethrough, wherein when the strip element (6) and/or the at least one lip element (7) is/are made of an opaque material, the strip element (6) and/or the at least one lip element (7) comprise (s) at least one opening (13) for light from the lighting device (9) to shine therethrough.

4. Device as claimed in any one of the preceding claims, **characterised in that** the lighting device (9) comprises at least one light source (10) and/or at least one afterglow pigment which is mixed with material of the covering device (3) or is applied to the outside of the covering device (3) as an afterglow ink, afterglow film or afterglow paint,
wherein the light source (10) is preferably a light-emitting diode, an organic light-emitting diode, an electroluminescent film, a filament lamp, a halogen lamp, a gas discharge lamp or a laser.

5. Device as claimed in any one of the preceding claims, **characterised in that** the covering device (3) is a decorative element, in particular an ornamental strip, and/or a functional element, in particular a roof protective strip (32), a roof rack (26), a handle strip or a bumper guard, and/or **in that** the covering device (3) comprises at least one light guide (11) which is integrated into the covering device (3),
wherein the at least one light guide (11) is integrated into the covering device (3) preferably integrally or as a separate component, and/or
wherein the at least one light guide (11) is extruded or injection moulded into the covering device (3) and/or is arranged in at least one cavity in the covering device (3), and/or
wherein the light guide (11) can be coupled to the at least one light source (10), wherein the light guide (11) is in particular an elongate light guide, a light-guiding film and/or a light-guiding fabric.

6. System comprising a covering device (3) as claimed in any one of the preceding claims and a lighting device (9).

7. System as claimed in claim 6, **characterised in that** the lighting device (9) comprises at least one light source (10) and/or at least one afterglow pigment which is mixed with the material of the covering device or is applied to the outside of the covering device (3) as an afterglow ink, afterglow film or afterglow paint, and wherein the light source (10) is in particular a light-emitting diode, an organic light-emitting diode, an electroluminescent film, a filament lamp or a laser, and wherein the lighting device (9) preferably comprises at least one light guide (11) which can be coupled to the at least one light source (10), wherein the light guide (11) is in particular an elongate light guide, a light-guiding film or a light-guiding fabric.

8. Body component (1) of a vehicle (2) which comprises at least one flat portion, at least one curved portion, at least one stepped portion and/or a recess (5), wherein the flat portion, the curved portion, the stepped portion and/or the recess (5) is/are at least partially covered by at least one covering device (3) as claimed in any one of claims 1 to 5, and light from the lighting device (9) shines through at least the portion of the covering device (3).

9. Body component as claimed in claim 8, **characterised in that** the lighting device (9) is part of the body component (1) and/or part of the covering device (3), and/or
wherein the body component (1) is a roof panel (4), a door panel (23), a wing panel (33), a bonnet panel (34), a tailgate panel (35), a front apron panel (36), a front bumper panel (38), a rear bumper panel (39), a rear apron panel (40) or a side panel (12) of a vehicle (2).

10. Body component system comprising a first and a second body component (1),
- wherein the first and the second body components (1) together form a recess (5), in particular a gap or joint gap,
- wherein the recess (5) is at least partially covered by at least one covering device (3) as claimed in any one of claims 1 to 5, and
- wherein light from a lighting device (9) shines through at least the portion of the covering device (3).

11. Body component system comprising a body component (1) and a vehicle element (25, 27, 30, 31, 37, 41, 42, 43),
- wherein the body component (1) and the vehicle element together form a recess (5), in particular a joint or joint gap,
- wherein the recess (5) is at least partially covered by at least one covering device (3) as claimed in any one of claims 1 to 5, and
- wherein light from the lighting device (9) shines through at least the portion of the covering device (3).

12. Body component system comprising a body component (1) and a vehicle element (25, 27, 30, 31, 37, 41, 42, 43),
- wherein the body component (1) or the vehicle element comprises a recess (5), a flat portion, a curved portion and/or a stepped portion,
- wherein the recess (5), the flat portion, the curved portion and/or the stepped portion is/are at least partially covered by at least one covering device (3) as claimed in any one of claims 1 to 5, and
- wherein light from the lighting device (9) shines through at least the portion of the covering device (3).

13. System as claimed in claim 11 or 12, **characterised in that** the vehicle element is a side window (25), a sunroof (27), a glass roof, a windscreen (30), a rear window (31), a radiator grill (37), a vehicle lamp (41), a vehicle mirror (42) or a vehicle mirror casing (43),
and/or
wherein the lighting device (9) is part of at least one of the body components (1), of at least one vehicle element (25, 27, 30, 31, 37, 41, 42, 43) and/or part of the covering device (3), and/or
wherein the first body component (1) is a roof panel (4) and the second body component (1) is a side panel (12).

14. Vehicle (1), in particular motor vehicle, comprising a body component (1) as claimed in any one of claims 8 to 9 and/or a body component system as claimed in any one of claims 10 to 13.

15. Vehicle as claimed in claim 14, **characterised in that** the covering device (3) extends in the longitudinal direction of the vehicle (2) and/or in the transverse direction of the vehicle (2) along a recess (5) in the body component (1) or in the body component system,
wherein the covering device (3) extends in the longitudinal direction of the vehicle (2) and/or in the transverse direction of the vehicle (2) preferably along a recess (5) in the first or second body component (1) of the body component system as claimed in claim 10 or along a common recess in the first and second body components (1) of the body component system as claimed in claim 10, and
wherein the covering device (3) extends in the longitudinal direction of the vehicle (2) and/or in the transverse direction of the vehicle (2) along a recess (5) in the body component (1) or in the vehicle element (25, 27, 30, 31, 37, 41, 42, 43) of the body component system as claimed in any one of claims 11 to 13 along a common recess (5) in the body component (1) and in the vehicle element (25, 27, 30, 31, 37, 41, 42, 43).

## Revendications

1. Dispositif de recouvrement (3) pour recouvrement au moins partiel d'un creux (5), d'une section plane, d'une section bombée et/ou d'une section étagée d'au moins une pièce de carrosserie (1) et/ou d'un élément de véhicule (25, 27, 30, 31, 37, 41, 42, 43) appartenant à un véhicule (2), le dispositif de recouvrement (3) présentant un dispositif d'éclairage (9) ou pouvant être couplé à un dispositif d'éclairage (9), ce dispositif de recouvrement (3) présentant un élément en ruban (6),
**caractérisé en ce que**
le dispositif de recouvrement (3) présente sur au moins un côté longitudinal, au moins un élément à lèvre (7), lequel est relié de manière amovible à l'élément en ruban (6), et **en ce que** le dispositif de recouvrement (3) est configuré de telle sorte que l'élément en ruban (6) et/ou le au moins un élément à lèvre (7) peut être illuminé au moyen du dispositif d'éclairage (9).

2. Dispositif selon la revendication 1,
**caractérisé en ce que**
le dispositif de recouvrement (3) présente, sur au moins un côté longitudinal, au moins un autre élément à lèvre (7), lequel est solidement fixé à l'élément en ruban (6), et/ou
**en ce que** le au moins un élément à lèvre (7) est fixé à l'élément en ruban (16) comme pièce séparée et en particulier par collage, clipsage et/ou serrage, l'élément en ruban (6) présentant au moins un support (20) pour la prise d'au moins une section d'attache (22) du au moins un élément à lèvre (7), le support (20) étant configuré de préférence sous forme de rainure (21) avec un dégagement.

3. Dispositif selon la revendication 2,
**caractérisé en ce que**
l'élément en ruban (6) et/ou le au moins un élément à lèvre (7) pour illumination par dispositif d'éclairage (9), est/sont fabriqués dans un matériau au moins partiellement transparent, translucide ou opaque, dans lequel
lorsque l'élément en ruban (6) et/ou le au moins un élément à lèvre (7) est/sont en matériau opaque, l'élément en ruban (6) et/ou le au moins un élément à lèvre (7), présente/présentent au moins une ouverture (13) pour l'illumination par le dispositif d'éclairage (9).

4. Dispositif selon l'une des revendications précédentes, **caractérisé en ce que**
le dispositif d'éclairage (9) présente au moins une source lumineuse (10) et/ou au moins un pigment phosphorescent, lequel est mélangé au matériau du dispositif de recouvrement (3) ou est appliqué comme couleur phosphorescente, feuille phosphorescente ou peinture phosphorescente sur le côté extérieur du dispositif de recouvrement (3),
la source lumineuse (10) étant de préférence une diode électroluminescente, une diode électroluminescente organique, une feuille électroluminescente, une ampoule, une lampe halogène, une lampe à décharge ou un laser.

5. Dispositif selon l'une des revendications précédentes, **caractérisé en ce que**
le dispositif de recouvrement (3) est un élément décoratif, en particulier une moulure enjoliveuse, et/ou un élément fonctionnel, en particulier une bande de protection pour le toit (32), un rail de toit (26), une poignée de maintien ou un pare-buffle, et/ou **en ce que** le dispositif de recouvrement (3) présente au moins un guide de lumière (11) intégré au dispositif de recouvrement (3),
le au moins un guide de lumière (11) étant de préférence noyé ou intégré comme pièce séparée dans le dispositif de recouvrement (3), et/ou
le au moins un guide de lumière (11) étant inclus par extrusion, par injection dans le dispositif de recouvrement (3) et/ou étant agencé dans au moins une cavité du dispositif de recouvrement (3), et/ou le guide de lumière (11) pouvant être couplé avec la au moins une source lumineuse (10), dans lequel le guide de lumière (11) sera en particulier une guide de lumière funiforme, une feuille guidant la lumière et/ou un tissu guidant la lumière.

6. Système, présentant un dispositif de recouvrement (3) selon l'une des revendications précédentes et un dispositif d'éclairage (9).

7. Système selon la revendication 6,
**caractérisé en ce que**
le dispositif d'éclairage (9) présente au moins une source lumineuse (10) et/ou au moins un pigment phosphorescent, lequel est mélangé au matériau du dispositif de recouvrement ou est appliqué comme couleur phosphorescente, feuille phosphorescente ou peinture phosphorescente sur le côté extérieur du dispositif de recouvrement (3), et dans lequel la source lumineuse (10) sera en particulier une diode électroluminescente, une électrode luminescente organique, une feuille à électroluminescence, une ampoule ou un laser, et
le dispositif d'éclairage (9) présentant de préférence au moins un guide de lumière (11), lequel peut être couplé à la au moins une source lumineuse (10), dans lequel le guide de lumière (11) est en particulier un guide de lumière funiforme, une feuille guidant la lumière ou un tissu guidant la lumière.

8. Pièce de carrosserie (1) d'un véhicule (2), laquelle présente au moins une section plane, au moins une section bombée, au moins une section étagée et/ou un creux (5), la section plane, la section bombée, la section étagée et/ou le creux (5) étant recouvertes au moins partiellement par au moins un dispositif de recouvrement (3) selon l'une des revendications 1 à 5 et au moins une section du dispositif de recouvrement (3) étant illuminée au moyen du dispositif d'éclairage (9).

9. Pièce de carrosserie selon la revendication 8, **caractérisé en ce que**
le dispositif d'éclairage (9) fait partie de la pièce de carrosserie (1) et/ou partie du dispositif de recouvrement (3), et/ou
dans lequel la pièce de carrosserie (1) est une tôle de toit (4), une tôle de portière (23), une tôle d'aile de voiture (33), une tôle de capot de moteur (34), une tôle de hayon (35), une tôle de bouclier avant (36), une tôle de pare-choc avant (38), une tôle de pare-choc arrière (39), une tôle de bouclier arrière (40) ou une tôle de panneau latéral (12) d'un véhicule (2).

10. Système de pièce de carrosserie, présentant une première et une deuxième pièce de carrosserie (1),
- dans lequel la première et la deuxième pièce de carrosserie (1) forment ensemble un creux (5), en particulier un écartement, ou un écartement de joint,
- dans lequel le creux (5) est recouvert au moins partiellement par au moins un dispositif de recouvrement (3) selon l'une des revendications 1 à 5, et
- dans lequel au moins la une section du dispositif de recouvrement (3) est illuminée au moyen d'un dispositif d'éclairage (9).

11. Système de pièce de carrosserie, présentant une pièce de carrosserie (1) et un élément de véhicule (25, 27, 30, 31, 37, 41, 42, 43),
- dans lequel la pièce de carrosserie (1) et l'élément de véhicule forment ensemble un creux (5), une particulier un joint ou un écartement de joint,
- dans lequel le creux (5) est recouvert au moins partiellement par au moins un dispositif de recouvrement (3) selon l'une des revendications 1 à 5, et
- dans lequel au moins une section du dispositif de recouvrement (3) est illuminée au moyen d'un dispositif d'éclairage (9).

12. Système de pièce de carrosserie, présentant une pièce de carrosserie (1) et un élément de véhicule (25, 27, 30, 31, 37, 41, 42, 43),
- dans lequel la pièce de carrosserie (1) ou l'élément de véhicule présente un creux (5), une section plane, une section bombée et/ou une section étagée,
- dans lequel le creux (5), la section plane, la section bombée et/ou la section étagée est au moins partiellement recouverte par au moins un dispositif de recouvrement (3) selon l'une des revendications 1 à 5, et
- dans lequel au moins une section du dispositif de recouvrement (3) est illuminée au moyen d'un dispositif d'éclairage (9).

13. Système selon la revendication 11 ou 12,
**caractérisé en ce que**
l'élément de véhicule est une vitre latérale (25), un toit ouvrant coulissant (27), un toit vitré, un parebrise (30), une lunette arrière (31), une calandre (37), un phare de véhicule (41), un rétroviseur de véhicule (42) ou un logement de rétroviseur (43), et/ou le dispositif d'éclairage (9) fait partie d'au moins une des pièces de carrosserie (1), d'au moins un élément de véhicule (25, 27, 30, 31, 37, 41, 42, 43) et/ou partie du dispositif de recouvrement (3), et/ou la première pièce de carrosserie (1) étant une tôle de toit (4) et la deuxième pièce de carrosserie (1) étant une tôle de panneau latéral (12).

14. Véhicule (1), en particulier véhicule automobile, avec une pièce de carrosserie (1) selon l'une des revendications 8 à 9 et/ou système de pièce de carrosserie selon l'une des revendications 10 à 13.

15. Véhicule selon la revendication 14,
**caractérisé en ce que**
le dispositif de recouvrement (3) s'étend le long d'un creux (5) de la pièce de carrosserie (1) ou du système de pièce de carrosserie dans la direction longitudinale du véhicule (2) et/ou dans la direction transversale du véhicule (2),
le dispositif de recouvrement (3) s'étendant de préférence le long d'un creux (5) de la première ou de la deuxième partie de carrosserie (1) du système de pièce de carrosserie selon la revendication 10 ou le long d'un creux commun de la première et de la deuxième partie de carrosserie (1) du système de pièce de carrosserie selon la revendication 10 dans la direction longitudinale du véhicule (2) et/ou dans la direction transversale du véhicule (2), et
le dispositif de recouvrement (3) s'étendant en particulier le long d'un creux (5) de la pièce de carrosserie (1) ou de l'élément de véhicule (25, 27, 30, 31, 37, 41, 42, 43) du système de pièce de carrosserie selon l'une des revendications 11 à 13 le long d'un creux (5) commun de la pièce de carrosserie (1) et de l'élément de véhicule (25, 27, 30, 31, 37, 41, 42, 43) dans la direction longitudinale du véhicule (2) et/ou dans la direction transversale du véhicule (2).
